# EUROPEAN PATENT APPLICATION

(11) **EP 4 485 304 A1**
(43) Date of publication of application: **01.01.2025**
(21) Application number: 24184819.1
(22) Date of filing: 26.06.2024
(51) Int. Cl.: G06Q 10/0637, G06Q 10/10

(54) **SYSTEMS AND METHODS FOR DISTRIBUTION MANAGEMENT INCLUDING SINGLE PANE OF GLASS USER INTERFACE**

(30) Priority: 26.06.2023 US 202318341714
(71) Applicant: Ingram Micro Inc., Irvine, CA 92612 (US)
(72) Inventor: SAHOO, Sanjib, Naperville, IL 60564 (US)
(74) Representative: Wachinger, Julian Friedrich

(57) **Abstract**

System and methods are provided for dynamically consolidating interaction points in a supply chain and distribution ecosystem. The method involves integrating multiple communication channels (i.e., touchpoints) between distributors, resellers, end-users, vendors, and suppliers into a unified interactive interface. This interface enables the management of end-to-end partner lifecycle, systematic data collection, analysis using advanced statistical algorithms, deployment of artificial intelligence and machine learning algorithms, and continuous updates based on user feedback. The system includes modules for communication integration, consolidation, lifecycle management, data collection, data analysis, and artificial intelligence. The disclosed method and system enhance supply chain and distribution operations, generate actionable insights, and provide personalized user experiences, ultimately driving business growth and efficiency.

## Description

### BACKGROUND

The disclosed embodiments relate to aspects of a user interface (UI) method and system. The traditional global distribution industry faces a multitude of challenges that encompass supply chain and distribution management, inventory control, stock keeping unit (SKU) management, compliance, and evolving consumer expectations. Traditionally, supply chain and distribution management, not being a core competency for many distributors, has been fraught with inefficiencies. Inventory control has long been a significant concern, with market fluctuations demanding flexible supply chain and distribution models. SKU management and localization have added layers of complexity due to divergent data from various original equipment manufacturers (OEMs) and the requirements of differing jurisdictions. Compliance with international regulations has also demanded additional vigilance and paperwork. Finally, traditional customer interaction methods are quickly becoming outdated with the shift towards ecosystem commerce.

Despite these issues, the distribution model has inherent advantages over direct-to-consumer models. It allows manufacturers to focus on their core capabilities and leverage the expansive reach and value-added services of distributors. However, for these benefits to continue, the traditional model must evolve, necessitating streamlined and efficient processes.

### BRIEF SUMMARY OF THE DISCLOSED EMBODIMENTS

The global distribution industry is at a critical juncture, grappling with an array of challenges that span across multiple domains. These obstacles, which are both historical and emergent, necessitate the crafting of innovative and effective solutions to steer the sector towards growth and efficiency. Among these numerous hurdles, the most significant ones reside within the realms of supply chain and distribution management, inventory and compliance issues, SKU management, the shift to direct-to-consumer models, and the rapidly evolving consumer expectations and behavior.

The first key challenge pertains to the management of the supply chain, a central part of the operations for any distributor, but which is not typically within a distributor's core competencies. This gap creates inefficiencies in the system and compounds the difficulties in managing disruptions, which in turn has a direct bearing on a distributor's capacity to deliver products and services efficiently and on time. To add to these challenges, market trends are skewing towards a more direct-to-consumer model. The traditional distribution methodologies, which involved numerous intermediaries, are being gradually displaced. This evolving market dynamic necessitates a significant reassessment and reorientation of existing business models and strategies to ensure alignment with this new market reality.

A quintessential problem in the realm of distribution is inventory management. Considering the mercurial nature of market demands and trends, companies must ensure they maintain a flexible supply chain and distribution network without necessarily holding positions in inventory. This makes the task of promising and delivering goods to customers substantially more complex and challenging. Besides, the sheer necessity of navigating through a myriad of compliance regulations for transporting goods and services across international borders adds an additional layer of complexity to the distribution process. This not only makes the distribution process more intricate and challenging but also imposes an extra layer of vigilance and paperwork to remain compliant.

To compound these challenges further, the issues surrounding the localization of products, varying distribution rights, and managing global SKUs also need to be addressed. The process of reconciling data from different OEMs, each with its unique systems and processes, adds to the complexity. Furthermore, addressing the requirements of localization that are in line with laws and regulations of different jurisdictions adds to the inefficiencies and the potential for errors.

Finally, processes should be made more efficient and streamlined to ensure the sustainability of the distribution model in the evolving market landscape. This involves shifting the focus of the distribution platform from supply chain and distribution management to encompass subscription management, customer visibility, and other key distribution-oriented functionalities. The landscape of consumer behavior and expectations is rapidly changing. The shift towards ecosystem commerce necessitates the creation of a user-friendly, efficient, and configurable platform for purchasing technology. Traditional methods of customer interaction are quickly losing favor, making it indispensable for companies to evolve and cater to these new customer expectations.

Despite these challenges, the distribution model holds numerous advantages over the direct-to-consumer model. Firstly, it enables manufacturers to focus on their core competencies, leaving the complexities of logistics and distribution to specialized entities. Secondly, distribution networks often have extensive reach, allowing products to be available to customers in far-flung areas that may not be feasible for manufacturers to cover directly. Thirdly, distributors often offer value-added services such as after-sales support, installation, and training that enhance the overall customer experience.

However, for these benefits to materialize and for the distribution model to remain relevant and effective, it is imperative that it evolves and adapts to the emerging challenges. The current pain points need to be addressed, and processes should be made more efficient and streamlined to ensure the sustainability of the distribution model in the evolving market landscape. Systems and methodologies described herein are directed to addressing these challenges. Specifically, these systems and methodologies remove the points of friction between distribution areas, including supply chain, cloud services, software as a service (SaSS), etc. Moreover, systems described herein can be configured to encompass features such as subscription management and other customer-centric areas that traditional distribution platforms have not effectively managed.

### Single Pane of Glass

The Single Pane of Glass (SPoG) disclosed herein can provide a comprehensive solution that aims to address these challenges. It can be configured to provide a holistic, user-friendly, and efficient platform that streamlines the distribution process.

According to some embodiments, SPoG can be configured to address supply chain and distribution management by enhancing visibility and control over the supply chain and distribution process. Through real-time tracking and analytics, SPoG can deliver valuable insights into inventory levels and the status of goods, ensuring that the process of supply chain and distribution management is handled efficiently.

According to some embodiments, SPoG can integrate multiple communication channels (i.e., touchpoints) into a single platform to emulate a direct consumer channel into a distribution platform. This integration provides a unified direct channel for consumers to interact with distributors, significantly reducing the complexity of the supply chain and enhancing the overall customer experience.

SPoG offers an innovative solution for improved inventory management through advanced forecasting capabilities. These predictive analytics can highlight demand trends, guiding companies in managing their inventory more effectively and mitigating the risks of stockouts or overstocks.

According to some embodiments, SPoG can include a global compliance database. Updated in real-time, this database enables distributors to stay abreast with the latest international laws and regulations. This feature significantly reduces the burden of manual tracking, ensuring smooth and compliant cross-border transactions.

According to some embodiments, to streamline SKU management and product localization, SPoG integrates data from various OEMs into a single platform. This not only ensures data consistency but also significantly reduces the potential for errors. Furthermore, it provides capabilities to manage and distribute localized SKUs efficiently, thereby aligning with specific market needs and requirements.

According to some embodiments, SPoG is its highly configurable and user-friendly platform. Its intuitive interface allows users to easily access and purchase technology, thereby aligning with the expectations of the new generation of tech buyers.

Moreover, SPoG's advanced analytics capabilities offer invaluable insights that can drive strategy and decision-making. It can track and analyze trends in real-time, allowing companies to stay ahead of the curve and adapt to changing market conditions.

SPoG's flexibility and scalability make it a future-proof solution. It can adapt to changing business needs, allowing companies to expand or contract their operations as needed without significant infrastructural changes.

SPoG's innovative approach to resolving the challenges in the distribution industry makes it an invaluable tool. By enhancing supply chain and distribution visibility, streamlining inventory management, ensuring compliance, simplifying SKU management, and delivering a superior customer experience, it offers a comprehensive solution to the complex problems that have long plagued the distribution sector. Through its implementation, distributors can look forward to increased efficiency, reduced errors, and improved customer satisfaction, leading to sustained growth in the ever-evolving global market.

### Real-Time Data Mesh (RTDM)

The platform can be include implementation(s) of a Real-Time Data Mesh (RTDM), according to some embodiments. RTDM offers an innovative solution to address these challenges. RTDM can provide a distributed data architecture to enable real-time data availability across multiple sources and touchpoints. This aspect enhances supply chain and distribution visibility, allowing for efficient management and enabling distributors to handle disruptions more effectively.

RTDM enables generation of predictive analytics, a capability that offers a solution for efficient inventory control. By providing insights into demand trends, it aids companies in managing inventory, reducing risks of overstocking or stockouts.

RTDM can also facilitate global compliance, providing compliance data updated in real-time, to ensure distributors are current with international regulations. It significantly reduces the manual tracking burden, enabling integrated cross-border transactions.

The RTDM also simplifies SKU management and localization by integrating data from various OEMs, ensuring data consistency and reducing error potential. Its capabilities for managing and distributing localized SKUs align with specific market needs efficiently.

The RTDM enhances customer experience for all stakeholders with its consolidated and intuitive interface, allowing easy access and transactions of technology, meeting the expectations of a consumer-driven generation of technology partners.

### Advantages of SPoG and RTDM Integration

Integrating the SPoG UI platform with the RTDM enables a consolidated, holistic approach to technical challenges encountered in a distribution platform. Integrating the RTDM's capabilities, SPoG can enhance supply chain and distribution visibility, streamline inventory management, ensure compliance, simplify SKU management, and deliver a superior customer experience. The real-time tracking and analytics offered by RTDM improve SPoG's ability to manage the supply chain and inventory effectively. It provides accurate and up-to-date information, enabling distributors to make informed decisions quickly. Integrating SPoG with RTDM also ensures data consistency and reduces errors and latency in SKU management and pricing. By providing a centralized platform for managing data from various OEMs, it simplifies product localization and helps to align with market needs.

### BRIEF DESCRIPTION OF THE DRAWINGS

FIG. 1 illustrates one embodiment of an operating environment of a distribution platform, referred to as System in this embodiment.
FIG. 2 illustrates one embodiment of an operating environment of the distribution platform, which builds upon the elements introduced in FIG. 1.
FIG. 3 illustrates one embodiment of a system for supply chain and distribution management.
FIG. 4 depicts an embodiment of an advanced distribution platform including System for managing a complex distribution network, which can be an embodiment of System, and provides a technology distribution platform for optimizing the management and operation of distribution networks.
FIG. 5 illustrates an RTDM module, according to an embodiment.
FIG. 6 illustrates a SPoG UI, according to an embodiment.
FIG. 7 is a flow diagram of a method for performing comprehensive supply chain and distribution management operations using the SPoG UI, according to some embodiments of the present disclosure.
FIG. 8 is a flow diagram of a method for vendor onboarding using the SPoG UI, according to some embodiments of the present disclosure.
FIG. 9 is a flow diagram of a method for reseller onboarding using the SPoG UI, according to some embodiments of the present disclosure.
FIG. 10 is a flow diagram of a method for customer and end customer onboarding using the SPoG UI, according to some embodiments of the present disclosure.
FIG. 11 is a block diagram of example components of device, according to some embodiments of the present disclosure.
FIGS. 12A to 12Q depict various screens and functionalities of the SPoG UI, according to some embodiments.

### DETAILED DESCRIPTION OF THE DISCLOSED EMBODIMENTS

Embodiments may be implemented in hardware, firmware, software, or any combination thereof. Embodiments may also be implemented as instructions stored on a machine-readable medium, which may be read and executed by one or more processors. A machine-readable medium may include any mechanism for storing or transmitting information in a form readable by a machine (e.g., a computing device). For example, a machine-readable medium may include read only memory (ROM); random access memory (RAM); magnetic disk storage media; optical storage media; flash memory devices, and others. Further, firmware, software, routines, instructions may be described herein as performing certain actions. However, it should be appreciated that such descriptions are merely for convenience and that such actions in fact result from computing devices, processors, controllers, or other devices executing the firmware, software, routines, instructions, etc.

It should be understood that the operations shown in the exemplary methods are not exhaustive and that other operations can be performed as well before, after, or between any of the illustrated operations. In some embodiments of the present disclosure, the operations can be performed in a different order and/or vary.

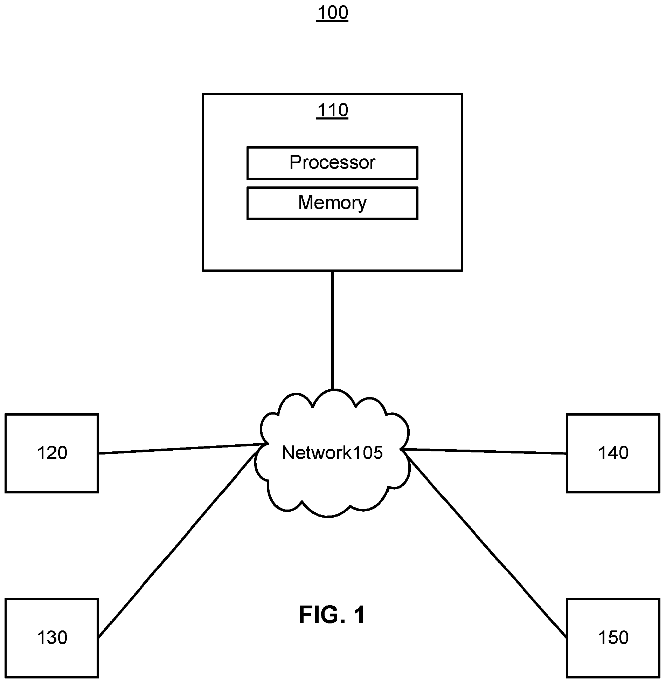

FIG. 1 illustrates an operating environment 100 of a distribution platform, referred to as System 110 in this embodiment. System 110 operates within the context of an information technology (IT) distribution model, catering to various stakeholders such as customers 120, end customers 130, vendors 140, resellers 150, and other entities involved in the distribution process. This operating environment encompasses a broad range of characteristics and dynamics that contribute to the success and efficiency of the distribution platform.

Customers 120 within the operating environment of System 110 represent businesses or individuals seeking IT solutions to meet their specific needs. These customers may require a diverse range of IT products such as hardware components, software applications, networking equipment, or cloud-based services. System 110 provides customers with a user-friendly interface, allowing them to browse, search, and select the most suitable IT solutions based on their requirements. Customers can also access real-time data and analytics through System 110, empowering them to make informed decisions and optimize their IT infrastructure.

End customers 130 are the ultimate beneficiaries of the IT solutions provided by System 110. They may include businesses or individuals who utilize IT products and services to enhance their operations, productivity, or daily activities. End customers rely on System 110 to access a wide array of IT solutions, ensuring they have access to the latest technologies and innovations in the market. System 110 enables end customers to track their orders, receive updates on delivery status, and access customer support services, thereby enhancing their overall experience.

Vendors 140 play a crucial role within the operating environment of System 110. These vendors encompass manufacturers, distributors, and suppliers who offer a diverse range of IT products and services. System 110 acts as a centralized platform for vendors to showcase their offerings, manage inventory, and facilitate transactions with customers and resellers. Vendors can leverage System 110 to streamline their supply chain and distribution operations, manage pricing and promotions, and gain insights into customer preferences and market trends. By integrating with System 110, vendors can expand their reach, access new markets, and enhance their overall visibility and competitiveness.

Resellers 150 are intermediaries within the distribution model who bridge the gap between vendors and customers. They play a vital role in the IT distribution ecosystem by connecting customers with the right IT solutions from various vendors. Resellers may include retailers, value-added resellers (VARs), system integrators, or managed service providers. System 110 enables resellers to access a comprehensive catalog of IT solutions, manage their sales pipeline, and provide value-added services to customers. By leveraging System 110, resellers can enhance their customer relationships, optimize their product offerings, and increase their revenue streams.

Within the operating environment of System 110, there are various dynamics and characteristics that contribute to its effectiveness. These dynamics include real-time data exchange, integration with existing enterprise systems, scalability, and flexibility. System 110 ensures that relevant data is exchanged in real-time between stakeholders, enabling accurate decision-making and timely actions. Integration with existing enterprise systems such as enterprise resource planning (ERP) systems, customer relationship management (CRM) systems, and warehouse management systems allows for integrated communication and interoperability, eliminating data silos and enabling end-to-end visibility.

Scalability and flexibility are key characteristics of System 110. It can accommodate the growing demands of the IT distribution model, whether it involves an expanding customer base, an increasing number of vendors, or a wider range of IT products and services. System 110 is designed to handle large-scale data processing, storage, and analysis, ensuring that it can support the evolving needs of the distribution platform. Additionally, System 110 leverages a technology stack that includes .NET, Java, and other suitable technologies, providing a robust foundation for its operations.

In summary, the operating environment of System 110 within the IT distribution model encompasses customers 120, end customers 130, vendors 140, resellers 150, and other entities involved in the distribution process. System 110 serves as a centralized platform that facilitates efficient collaboration, communication, and transactional processes between these stakeholders. By leveraging real-time data exchange, integration, scalability, and flexibility, System 110 empowers stakeholders to optimize their operations, enhance customer experiences, and drive business success within the IT distribution ecosystem.

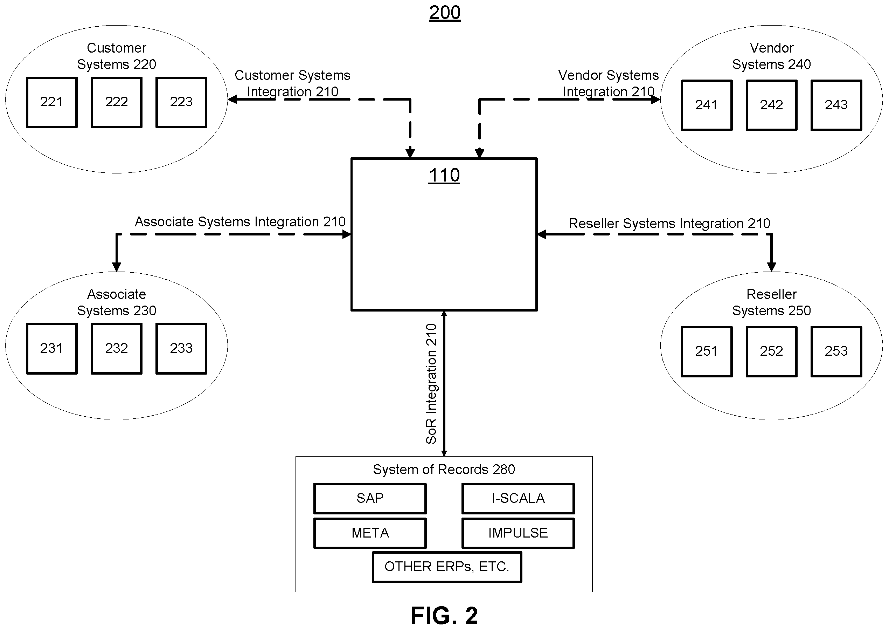

FIG. 2 illustrates an operating environment 200 of the distribution platform, which builds upon the elements introduced in FIG. 1. Within this operating environment, integration points 210 facilitate integrated data flow and connectivity between various customer systems 220, associate systems 230, vendor systems 240, reseller systems 250, and other entities involved in the distribution process. The diagram showcases the interconnectedness and the mechanisms that enable efficient collaboration and data-driven decision-making.

Operating environment 200 can include System 110 as a distribution platform that serves as the central hub for managing and facilitating the distribution process. System 110 can be configured to perform functions and operations as a bridge between customer systems 220, vendor systems 240, reseller systems 250, and other entities within the ecosystem. It can integrate communication, data exchange, and transactional processes, providing stakeholders with a unified and streamlined experience. Moreover, operating environment 200 can include one or more integration points 210 to ensure smooth data flow and connectivity. These integration points include:

Customer System Integration: Integration point 210 can enable System 110 to connect with customer systems 220, enabling efficient data exchange and synchronization. Customer systems 220 may include various entities such as customer system 221, customer system 222, and customer system 223. Integration with customer systems 220 empowers customers to access real-time inventory information, pricing details, order tracking, and other relevant data, enhancing their visibility and decision-making capabilities.

Associate System Integration: Integration point 210 can enable System 110 to connect with associate systems 230, enabling efficient data exchange and synchronization. Associate systems 230 may include various entities such as associate system 231, associate system 233, and associate system 233. Integration with associate systems 220 empowers customers to access real-time inventory information, pricing details, order tracking, and other relevant data, enhancing their visibility and decision-making capabilities.

Vendor System Integration: Integration point 210 facilitates the integrated connection between System 110 and vendor systems 240. Vendor systems 240 may include entities such as vendor system 241, vendor system 242, and vendor system 243, representing the inventory management systems, pricing systems, and product catalogs employed by vendors. Integration with vendor systems 240 ensures that vendors can efficiently update their product offerings, manage pricing and promotions, and receive real-time order notifications and fulfillment details.

Reseller System Integration: Integration point 210 provides capabilities for reseller systems 250 to connect with System 110. Reseller systems 250 may encompass entities such as reseller system 251, reseller system 252, and reseller system 253, representing the sales systems, customer management systems, and service delivery platforms employed by resellers. Integration with reseller systems 250 empowers resellers to access up-to-date product information, manage customer accounts, track sales performance, and provide value-added services to their customers.

Other Entity System Integration: Integration point 210 also enables connectivity with other entities involved in the distribution process. These entities may include entities such as entity system 271, entity system 272, and entity system 273. Integration with these systems ensures integrated communication and data exchange, facilitating collaboration and efficient distribution processes.

Integration point 210 also enables connectivity with System of Records 280, for additional data management and integration. Representing System of Records 280 can represent enterprise resource planning (ERP) systems or customer relationship management (CRM) systems, including both future systems as well as legacy ERP systems such as SAP, Impulse, META, I-SCALA, and others. System of Records can include one or more storage repositories of critical and legacy business data. It facilitates integration of data exchange and synchronization between the distribution platform, System 110, and the ERPs, enabling real-time updates and ensuring the availability of accurate and up-to-date information. Integration points 210 establish connectivity between the System of Records 280 and the distribution platform, allowing stakeholders to leverage rich data stored in the ERPs for efficient collaboration, data-driven decision-making, and streamlined distribution processes. These systems represent the internal systems utilized by customers, vendors, and others.

Integration points 210 within the operating environment 200 are facilitated through standardized protocols, APIs, and data connectors. These mechanisms ensure compatibility, interoperability, and secure data transfer between the distribution platform and the connected systems. System 110 employs industry-standard protocols, such as RESTful APIs, SOAP, or GraphQL, to establish communication channels and enable integrated data exchange.

In some embodiments, System 110 can incorporates authentication and authorization mechanisms to ensure secure access and data protection. Technologies such as OAuth or JSON Web Tokens (JWT) can be employed to authenticate users, authorize data access, and maintain the integrity and confidentiality of the exchanged information.

In some embodiments, integration points 210 and data flow within the operating environment 200 enable stakeholders to operate within a connected ecosystem. Data generated at various stages of the distribution process, including customer orders, inventory updates, shipment details, and sales analytics, flows efficiently between customer systems 220, vendor systems 240, reseller systems 250, and other entities. This data exchange facilitates real-time visibility, enables data-driven decision-making, and enhances operational efficiency throughout the distribution platform.

In some embodiments, System 110 leverages advanced technologies such as Typescript, NodeJS, ReactJS, .NET Core, C#, and other suitable technologies to support the integration points 210 and enable integrated communication within the operating environment 200. These technologies provide a robust foundation for System 110, ensuring scalability, flexibility, and efficient data processing capabilities. Moreover, the integration points 210 may also employ algorithms, data analytics, and machine learning techniques to derive valuable insights, optimize distribution processes, and personalize customer experiences. Integration points 210 and data flow within the operating environment 200 enable stakeholders to operate within a connected ecosystem. Data generated at various touchpoints, including customer orders, inventory updates, pricing changes, or delivery status, efficiently flows between the different entities, systems, and components. The integrated data is processed, harmonized, and made available in real-time to relevant stakeholders through System 110. This real-time access to accurate and up-to-date information empowers stakeholders to make informed decisions, optimize supply chain and distribution operations, and enhance customer experiences.

Several elements in the operating environment depicted in FIG. 2 can include conventional, well-known elements that are explained only briefly here. For example, each of the customer systems, such as customer systems 220, could include a desktop personal computer, workstation, laptop, PDA, cell phone, or any wireless access protocol (WAP) enabled device, or any other computing device capable of interfacing directly or indirectly with the Internet or other network connection. Each of the customer systems typically can run an HTTP client, such as Microsoft's Edge browser, Google's Chrome browser, Opera's browser, or a WAP-enabled browser for mobile devices, allowing customer systems to access, process, and view information, pages, and applications available from the distribution platform over the network.

Moreover, each of the customer systems can typically be equipped with user interface devices such as keyboards, mice, trackballs, touchpads, touch screens, pens, or similar devices for interacting with a graphical user interface (GUI) provided by the browser. These user interface devices enable users of customer systems to navigate the GUI, interact with pages, forms, and applications, and access data and applications hosted by the distribution platform.

The customer systems and their components can be operator-configurable using applications, including web browsers, which run on central processing units such as Intel Pentium processors or similar processors. Similarly, the distribution platform (System 110) and its components can be operator-configurable using applications that run on central processing units, such as the processor system, which may include Intel Pentium processors or similar processors, and/or multiple processor units.

Computer program product embodiments include machine-readable storage media containing instructions to program computers to perform the processes described herein. The computer code for operating and configuring the distribution platform and the customer systems, vendor systems, reseller systems, and other entities' systems to intercommunicate, process webpages, applications, and other data, can be downloaded and stored on hard disks or any other volatile or non-volatile memory medium or device, such as ROM, RAM, floppy disks, optical discs, DVDs, CDs, micro-drives, magnetooptical disks, magnetic or optical cards, nano-systems, or any suitable media for storing instructions and data.

Furthermore, the computer code for implementing the embodiments can be transmitted and downloaded from a software source over the Internet or any other conventional network connection using communication mediums and protocols such as TCP/IP, HTTP, HTTPS, Ethernet, etc. The code can also be transmitted over extranets, VPNs, LANs, or other networks, and executed on client systems, servers, or server systems using programming languages such as C, C++, HTML, Java, JavaScript, ActiveX, VBScript, and others.

It will be appreciated that the embodiments can be implemented in various programming languages executed on client systems, servers, or server systems, and the choice of language may depend on the specific requirements and environment of the distribution platform.

Thereby, operating environment 200 can couple a distribution platform with one or more integration points 210 and data flow to enable efficient collaboration and streamlined distribution processes.

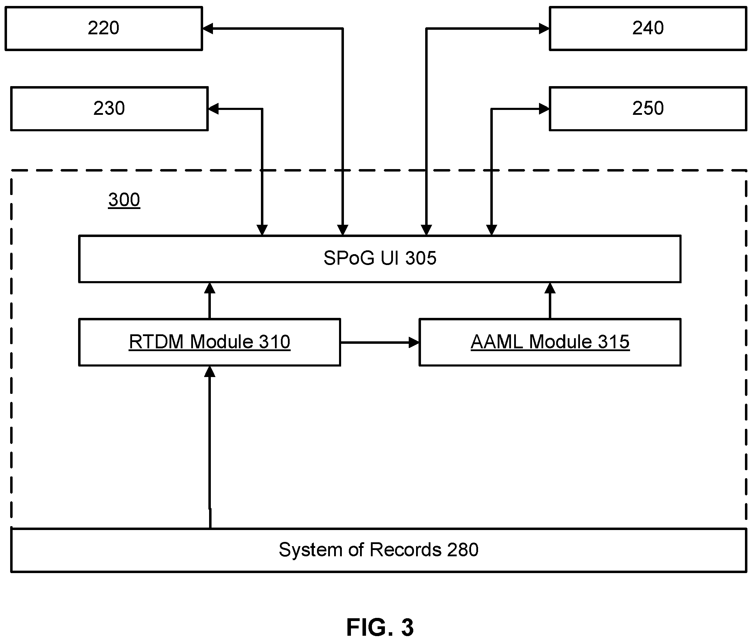

FIG. 3 illustrates a system 300 for supply chain and distribution management. System 300 is a supply chain and distribution management solution designed to address the challenges faced by fragmented supply chain and distribution ecosystems in the global distribution industry. System 300 can include several interconnected components and modules that work in harmony to optimize supply chain and distribution operations, enhance collaboration, and drive business efficiency.

In some embodiments, SPoG UI 305 serves as a centralized user interface, providing stakeholders with a unified view of the entire supply chain. It consolidates information from various sources and presents real-time data, analytics, and functionalities tailored to the specific roles and responsibilities of users. By offering a customizable and intuitive dashboard-style layout, the SPoG UI 305 enables users to access relevant information and tools, empowering them to make data-driven decisions and efficiently manage their supply chain activities.

For example, a logistics manager can use the SPoG UI 305 to monitor the status of shipments, track delivery routes, and view real-time inventory levels across multiple warehouses. They can visualize data through interactive charts and graphs, such as a map displaying the current location of each shipment or a bar chart showing inventory levels by product category. By having a unified view of the supply chain, the logistics manager can identify bottlenecks, optimize routes, and ensure timely delivery of goods.

In some embodiments, SPoG UI 305 integrates with other modules of System 300, facilitating real-time data exchange, synchronized operations, and streamlined workflows. Through API integrations, data synchronization mechanisms, and event-driven architectures, SPoG UI 305 ensures smooth information flow and enables collaborative decision-making across the supply chain and distribution ecosystem.

For instance, when a purchase order is generated in the SPoG UI 305, system 300 automatically updates the inventory levels, triggers a notification to the warehouse management system, and initiates the shipping process. This integration enables efficient order fulfillment, reduces manual errors, and enhances overall supply chain and distribution visibility.

In some embodiments, Real-Time Data Mesh (RTDM) module 310 can be configured to provide an integrated flow of data within the supply chain and distribution ecosystem. It aggregates data from multiple sources, harmonizes it, and ensures its availability in real-time.

In one non limiting example, RTDM module 310 can collect data from System of Records 280, which can represent various systems, including disparate inventory management systems, point-of-sale terminals, and customer relationship management systems. It harmonizes this data by aligning formats, standardizing units of measurement, and reconciling any discrepancies. The harmonized data is then made available in real-time, allowing stakeholders to access accurate and up-to-date information across the supply chain.

In some embodiments, RTDM module 310 can be configured to capture changes in data across multiple transactional systems in real-time. It employs a sophisticated Change Data Capture (CDC) mechanism that constantly monitors the transactional systems, detecting any updates or modifications. The CDC component is specifically designed to work with various transactional systems, which can include future and legacy ERP systems, Customer Relationship Management (CRM) systems, and other enterprise-wide systems, ensuring compatibility and flexibility for businesses operating in diverse environments.

By providing continuous access to real-time data, stakeholders can make timely decisions and respond quickly to changing market conditions. For example, if RTDM module 310 detects a sudden spike in demand for a particular product, it can trigger alerts to the production team, enabling them to adjust manufacturing schedules and prevent stockouts.

In some embodiments, RTDM module 310 facilitates data management within supply chain and distribution operations. It enables real-time harmonization of data from multiple sources, freeing vendors, resellers, customers, and end customers from constraints imposed by legacy ERP systems. This enhanced flexibility supports improved efficiency, customer service, and innovation.

System 300 can also include Advanced Analytics and Machine Learning (AAML) module 315. AAML module 315 can leverage powerful analytics tools and algorithms such as Apache Spark, TensorFlow, or scikit-learn, the AAMI, module extracts valuable insights from the collected data. It performs advanced analytics, predictive modeling, anomaly detection, and other machine learning operations.

For instance, AAML module 315 can analyze historical sales data to identify seasonal patterns and predict future demand. It can generate forecasts that help optimize inventory levels, ensure stock availability during peak seasons, and minimize excess inventory costs. By leveraging machine learning algorithms, AAML module 315 automates repetitive tasks, predicts customer preferences, and optimizes supply chain and distribution processes.

In addition to demand forecasting, AAMI, module 315 can provide insights into customer behavior, enabling targeted marketing campaigns and personalized customer experiences. For example, by analyzing customer data, the module can identify cross-selling or upselling opportunities and recommend relevant products to individual customers.

Furthermore, AAML module 315 can analyze data from various sources, such as social media feeds, customer reviews, and market trends, to gain a deeper understanding of consumer sentiment and preferences. This information can be used to inform product development decisions, identify emerging market trends, and adapt business strategies to meet evolving consumer expectations.

System 300 can perform integration and interoperability functions to connect with existing enterprise systems such as ERP systems, warehouse management systems, and customer relationship management systems. By establishing connections and data flows between these systems, System 300 enables smooth data exchange, process automation, and end-to-end visibility across the supply chain. Integration protocols, APIs, and data connectors facilitate integrated communication and interoperability among different modules and components, creating a holistic and connected supply chain and distribution ecosystem.

The implementation and deployment of System 300 can be tailored to meet specific business needs. In some non-limiting examples, it can be deployed as a cloud-native solution using containerization technologies like Docker^{®} and orchestration frameworks like Kubernetes^{®}. This approach ensures scalability, easy management, and efficient updates across different environments. The implementation process involves configuring the system to align with specific supply chain and distribution requirements, integrating with existing systems, and customizing the modules and components based on the business's needs and preferences.

System 300 for supply chain and distribution management is a comprehensive and innovative solution that addresses the challenges faced by fragmented supply chain and distribution ecosystems. It combines the power of the SPoG UI 305, RTDM module 310, and AAML module 315, along with integration with existing systems. By leveraging a diverse technology stack, scalable architecture, and robust integration capabilities, System 300 provides end-to-end visibility, data-driven decision-making, and optimized supply chain and distribution operations. The examples and options provided in this description are non-limiting and can be customized to meet specific industry requirements, driving efficiency and success in supply chain and distribution management.

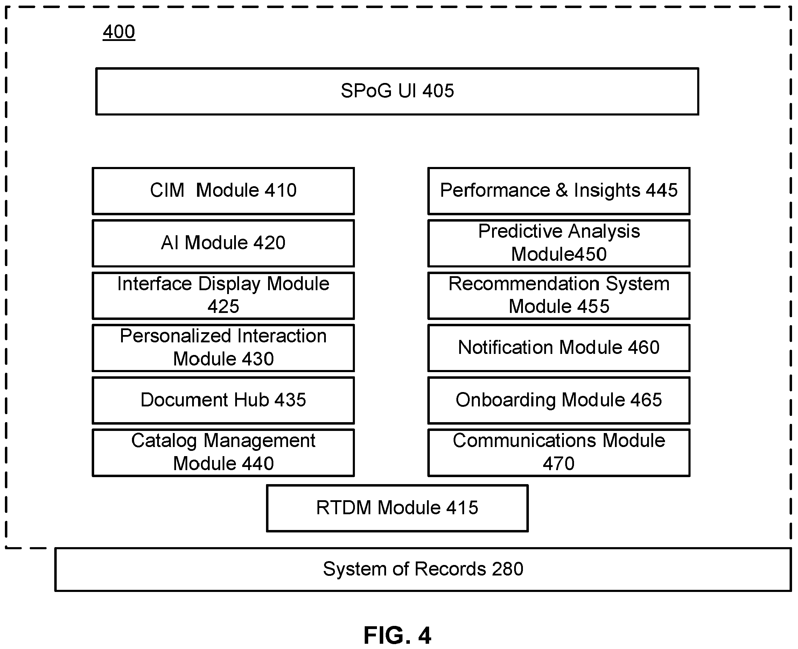

FIG. 4 depicts an embodiment of an advanced distribution platform including System 400 for managing a complex distribution network, which can be an embodiment of System 300, and provides a technology distribution platform for optimizing the management and operation of distribution networks. System 400 includes several interconnected modules, each serving specific functions and contributing to the overall efficiency of supply chain and distribution operations. In some embodiments, these modules can include SPoG UI 405, Customer Interaction Module (CIM) 410, RTDM module 415, AI module 420, Interface Display Module 425, Personalized Interaction Module 430, Document Hub 435, Catalog Management Module 440, Performance and Insight Markers Display 445, Predictive Analytics Module 450, Recommendation System Module 455, Notification Module 460, Self-Onboarding Module 465, and Communication Module 470.

System 400, as an embodiment of System 300, leverages a range of technologies and algorithms to integrate and consolidate supply chain and distribution management. These technologies and algorithms facilitate efficient data processing, personalized interactions, real-time analytics, secure communication, and effective management of documents, catalogs, and performance metrics.

In some embodiments, SPoG UI 405, in some embodiments, serves as the central interface within System 400, providing stakeholders with a unified view of the entire distribution network. It utilizes frontend technologies such as ReactJS, TypeScript, and Node.js to create interactive and responsive user interfaces. These technologies enable the SPoG UI 405 to deliver a user-friendly experience, allowing stakeholders to access relevant information, navigate through different modules, and perform tasks efficiently.

In some embodiments, CIM 410, or Customer Interaction Module, employs algorithms and technologies such as Oracled Eloqua^{®}, Adobe^{®} Target, and Okta^{®} to manage customer relationships within the distribution network. These technologies enable the module to handle customer data securely, personalize customer experiences, and provide integrated access control for stakeholders.

In some embodiments, RTDM module 415, or Real-Time Data Mesh module, is a critical component of System 400 that ensures the smooth flow of data across the supply chain and distribution ecosystem. It utilizes technologies such as Apache^{®} Kafka^{®}, Apache^{®} Flink^{®}, or Apache^{®} Pulsar for data ingestion, processing, and stream management. These technologies enable the RTDM module 415 to handle real-time data streams, process large volumes of data, and ensure low-latency data processing. Additionally, the module employs Change Data Capture (CDC) mechanisms to capture real-time data updates from various transactional systems, such as legacy ERP systems and CRM systems. This capability allows stakeholders to access up-to-date and accurate information for informed decision-making.

In some embodiments, AI module 420 within System 400 leverages advanced analytics and machine learning algorithms, including Apache^{®} Spark, TensorFlow^{®}, and scikit-learn^{®}, to extract valuable insights from data. These algorithms enable the module to automate repetitive tasks, predict demand patterns, optimize inventory levels, and improve overall supply chain and distribution efficiency. For example, the AI module 420 can utilize predictive models to forecast demand, allowing stakeholders to optimize inventory management and minimize stockouts or overstock situations.

In some embodiments, Interface Display Module 425 focuses on presenting data and information in a clear and user-friendly manner. It utilizes technologies such as HTML, CSS, and JavaScript frameworks like ReactJS to create interactive and responsive user interfaces. These technologies allow stakeholders to visualize data using various data visualization techniques, such as graphs, charts, and tables, enabling efficient data comprehension, comparison, and trend analysis.

In some embodiments, Personalized Interaction Module 430 utilizes customer data, historical trends, and machine learning algorithms to generate personalized recommendations for products or services. In some non-limiting examples, it can be implemented utilizing Adobe^{®} Target, Apache^{®} Spark, and TensorFlow^{®} for data analysis, modeling, and delivering targeted recommendations. For example, the module can analyze customer preferences and purchase history to provide personalized product recommendations, enhancing customer satisfaction and driving sales.

In some embodiments, Document Hub 435 serves as a centralized repository for storing and managing documents within System 400. In some non-limiting examples, it can be implemented utilizing SeeBurger^{®} and Elastic Cloud for efficient document management, storage, and retrieval. For instance, the Document Hub 435 can employ SeeBurger's document management capabilities to categorize and organize documents based on their types, such as contracts, invoices, product specifications, or compliance documents, allowing stakeholders to easily access and retrieve relevant documents when needed.

In some embodiments, Catalog Management Module 440 enables the creation, management, and distribution of up-to-date product catalogs. It ensures that stakeholders have access to the latest product information, including specifications, pricing, availability, and promotions. In some non-limiting examples, it can be implemented utilizing Kentico^{®} and Akamai^{®} to integrate and consolidate catalog updates, content delivery, and caching. For example, the module can leverage Akamai's content delivery network (CDN) to deliver catalog information to stakeholders quickly and efficiently, regardless of their geographical location.

In some embodiments, Performance and Insight Markers Display 445 collects, analyzes, and visualizes real-time performance metrics and insights related to supply chain and distribution operations. It utilizes tools like Splunk^{®} and Datadog^{®} to enable effective performance monitoring and provide actionable insights. For instance, the module can utilize Splunk's log analysis capabilities to identify performance bottlenecks in the supply chain, enabling stakeholders to take proactive measures to optimize operations.

In some embodiments, Predictive Analytics Module 450 employs machine learning algorithms and predictive models to forecast demand patterns, optimize inventory levels, and enhance overall supply chain and distribution efficiency. It utilizes technologies such as Apache^{®} Spark and TensorFlow^{®} for data analysis, modeling, and prediction. For example, the module can utilize TensorFlow's deep learning capabilities to analyze historical sales data and predict future demand, allowing stakeholders to optimize inventory levels and minimize costs.

In some embodiments, Recommendation System Module 455 focuses on providing intelligent recommendations to stakeholders within the distribution network. It generates personalized recommendations for products or services based on customer data, historical trends, and machine learning algorithms. In some non-limiting examples, it can be implemented utilizing Adobe^{®} Target and Apache^{®} Spark for data analysis, modeling, and delivering targeted recommendations. For instance, the module can leverage Adobe Target's recommendation engine to analyze customer preferences and behavior, and deliver personalized product recommendations across various channels, enhancing customer engagement and driving sales.

In some embodiments, Notification Module 460 enables the distribution of real-time notifications to stakeholders regarding important events, updates, or alerts within the supply chain. In some non-limiting examples, it can be implemented utilizing Apigee^{®} X and TIBCO^{®} for message queues, event-driven architectures, and integrated notification delivery. For example, the module can utilize TIBCO's messaging infrastructure to send real-time notifications to stakeholders' devices, ensuring timely and relevant information dissemination.

In some embodiments, Self-Onboarding Module 465 facilitates the onboarding process for new stakeholders entering the distribution network. It provides guided steps, tutorials, or documentation to help users become familiar with the system and its functionalities. In some non-limiting examples, it can be implemented utilizing technologies such as Okta^{®} and Kentico^{®} to ensure secure user authentication, access control, and self-learning resources. For instance, the module can utilize Okta's identity and access management capabilities to securely onboard new stakeholders, providing them with appropriate access permissions and guiding them through the system's functionalities.

In some embodiments, Communication Module 470 enables integrated and consolidated communication and collaboration within System 400. It provides channels for stakeholders to interact, exchange messages, share documents, and collaborate on projects. In some non-limiting examples, it can be implemented utilizing Apigee^{®} Edge and Adobe^{®} Launch are employed to facilitate secure and efficient communication, document sharing, and version control. For example, the module can utilize Apigee Edge's API management capabilities to ensure secure and reliable communication between stakeholders, enabling them to collaborate effectively.

Thereby, System 400 can incorporate various modules that utilize a diverse range of technologies and algorithms to optimize supply chain and distribution management. These modules, including SPoG UI 405, CIM 410, RTDM module 415, AI module 420, Interface Display Module 425, Personalized Interaction Module 430, Document Hub 435, Catalog Management Module 440, Performance and Insight Markers Display 445, Predictive Analytics Module 450, Recommendation System Module 455, Notification Module 460, Self-Onboarding Module 465, and Communication Module 470, work together to provide end-to-end visibility, data-driven decision-making, personalized interactions, real-time analytics, and streamlined communication within the distribution network. The incorporation of specific technologies and algorithms enables efficient data management, secure communication, personalized experiences, and effective performance monitoring, contributing to enhanced operational efficiency and success in supply chain and distribution management.

### REAL TIME DATA MESH

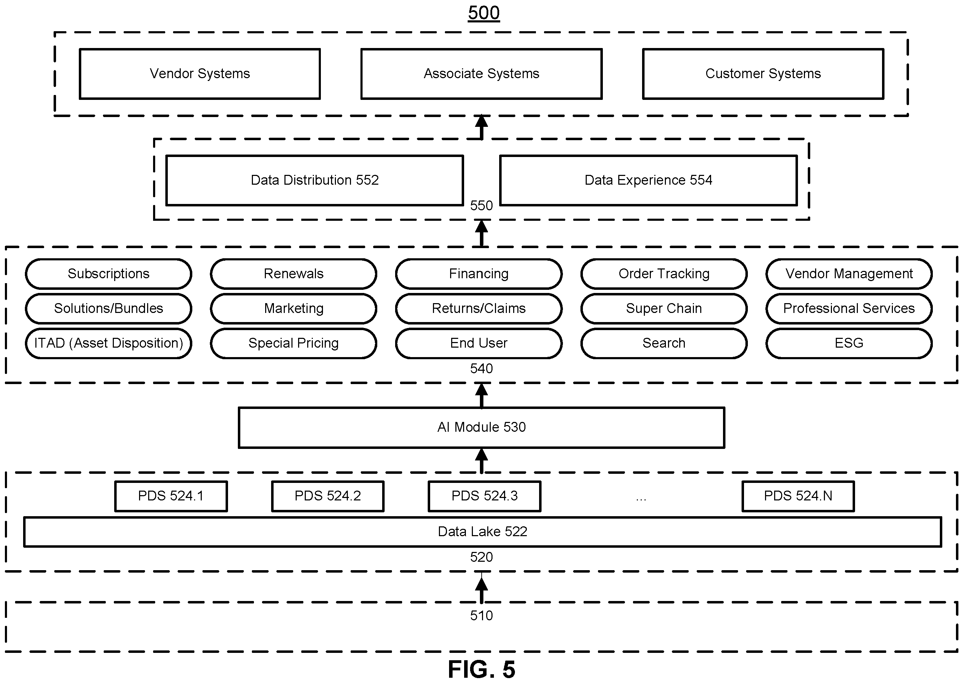

FIG. 5 illustrates RTDM module 500, according to an embodiment. RTDM module 500, which can be an embodiment of RTDM module 310, can include interconnected components, processes, and sub-systems configured to enable real-time data management and analysis.

In some embodiments, RTDM module 500, as depicted in FIG. 5, represents an effective data mesh and change capture component within the overall system architecture. The module is designed to provide real-time data management and harmonization capabilities, enabling efficient operations within the supply chain and distribution management domain.

RTDM module 500 can include an integration layer 510 (also referred to as a "system of records") that integrates with various enterprise systems. These enterprise systems can include ERPs such as SAP^{®}, Impulse, META, and I-SCALA, among others, and other data sources. Integration layer 510 can process data exchange and synchronization between RTDM module 500 and these systems. Data feeds are established to retrieve relevant information from the system of records, such as sales orders, purchase orders, inventory data, and customer information. These feeds enable real-time data updates and ensure that the RTDM module operates with the most current and accurate data.

RTDM module 500 can include data layer 520 configured to process and translate data for retrieval and analysis. RTDM module 500 generates a data mesh as a cloud-based infrastructure designed to provide scalable and fault-tolerant data storage capabilities. Within the data mesh, multiple Purposive Datastores (PDS) are deployed to store specific types of data, such as customer data, product data, or inventory data. Each PDS is optimized for efficient data retrieval based on specific use cases and requirements. The PDSes are configured to store specific types of data, such as customer data, product data, finance data, and more. These PDS serve as repositories for harmonized and standardized data, ensuring data consistency and integrity across the system.

In some embodiments, RTDM module 500 implements a data replication mechanism to capture real-time changes from multiple data sources, including transactional systems like ERPs (e.g., SAP^{®}, Impulse, META, I-SCALA). The captured data is then processed and harmonized on-the-fly, transforming it into a standardized format suitable for analysis and integration. This process ensures that the data is readily available and up-to-date within the data mesh, facilitating real-time insights and decision-making.

More specifically, data layer 520 within the RTDM module 500 can be configured as a powerful and flexible foundation for managing and processing data within the supply chain and distribution ecosystem. In some embodiments, data layer 520 can encompasses a highly scalable and robust data lake, which can be referred to as data lake 522, along with a set of purposive datastores (PDSes), which can be denoted as PDSes 524.1 to 524.N. These components work in harmony to ensure efficient data management, harmonization, and real-time availability.

In some embodiments, data layer 520 includes data lake 522, a novel storage and processing infrastructure designed to handle the ever-increasing volume, variety, and velocity of data generated within the supply chain. Built upon a scalable distributed file system, such as Apache^{®} Hadoop^{®} Distributed File System (HDFS) or Amazon^{®} S3, the data lake can provide a unified and scalable platform for storing both structured and unstructured data. Leveraging the elasticity and fault-tolerance of cloud-based storage, data lake 522 can aggregate and accommodate the influx of data from diverse sources.

Associated with data lake 522, a plurality of purposive datastores, PDSes 524.1 to 524.N, can be employed. Each PDS 524 can function as a purpose-built repository optimized for storing and retrieving specific types of data relevant to the supply chain and distribution domain. In some non-limiting examples, PDS 524.1 may be dedicated to customer data, storing information such as customer profiles, preferences, and transaction history. PDS 524.2 may be focused on product data, encompassing details about SKU codes, descriptions, pricing, and inventory levels. These purposive datastores allow for efficient data retrieval, analysis, and processing, catering to the diverse needs of supply chain and distribution stakeholders.

To ensure real-time data synchronization, data layer 520 can be configured to employ one or more sophisticated change data capture (CDC) mechanisms. These CDC mechanisms are integrated with the transactional systems, such as legacy ERPs like SAP^{®}, Impulse, META, and I-SCALA, as well as other enterprise-wide systems. CDC constantly monitors these systems for any updates, modifications, or new transactions and captures them in real-time. By capturing these changes, data layer 520 ensures that the data within the data lake 522 and PDSes 524 remains up-to-date, providing stakeholders with real-time insights into the supply chain and distribution ecosystem.

In some embodiments, data layer 520 can be implemented to facilitate integration with existing enterprise systems using one or more frameworks, such as .NET or Java, ensuring compatibility with a wide range of existing systems and providing flexibility for customization and extensibility. For example, data layer 520 can utilize the Java technology stack, including frameworks like Spring and Hibernated, to facilitate integration with a system of records having a population of diverse ERP systems and other enterprise-wide solutions. This can facilitate smooth data exchange, process automation, and end-to-end visibility across the supply chain.

In some embodiments, to facilitate data processing and analytics, data layer 520 can include one or more distributed computing frameworks, such as Apache^{®} Spark or Apache^{®} Flink in some non-limiting examples. These frameworks can enable parallel processing and distributed computing across large-scale datasets stored in the data lake and PDSes. By leveraging these frameworks, supply chain and distribution stakeholders can perform complex analytical tasks, apply machine learning algorithms, and derive valuable insights from the data. For instance, data layer 520 can leverage Apache Spark's machine learning libraries to develop predictive models for demand forecasting, optimize inventory levels, and identify potential supply chain and distribution risks.

In some embodiments, data layer 520 can incorporate robust data governance and security measures. Fine-grained access control mechanisms and authentication protocols ensure that only authorized users can access and modify the data within the data lake and PDSes. Data encryption techniques, both at rest and in transit, safeguard the sensitive supply chain and distribution information against unauthorized access. Additionally, data layer 520 can implement data lineage and audit trail mechanisms, allowing stakeholders to trace the origin and history of data, ensuring data integrity and compliance with regulatory requirements.

In some embodiments, data layer 520 can be deployed in a cloud-native environment, leveraging containerization technologies such as Docker^{®} and orchestration frameworks like Kubernetes^{®}. This approach ensures scalability, resilience, and efficient resource allocation. For example, data layer 520 can be deployed on cloud infrastructure provided by AWS^{®}, Azure^{®}, or Google^{®} Cloud, utilizing their managed services and scalable storage options. This allows for efficient scaling of resources based on demand, minimizing operational overhead and providing an elastic infrastructure for managing supply chain and distribution data.

Data layer 520 of RTDM module 500 can incorporate a highly scalable data lake, data lake 522, along with purpose-built PDSes, PDSes 524.1 to 524.N, and employing sophisticated CDC mechanisms, data layer 520 ensures efficient data management, harmonization, and real-time availability. The integration of diverse technology stacks, such as .NET or Java, and distributed computing frameworks like Apache^{®} Spark, enables powerful data processing, advanced analytics, and machine learning capabilities. With robust data governance and security measures, data layer 520 ensures data integrity, confidentiality, and compliance. Through its scalable infrastructure and efficient integration with existing systems, data layer 520 empowers supply chain and distribution stakeholders to make data-driven decisions, optimize operations, and drive business success in the dynamic and complex supply chain and distribution landscape.

RTDM module 500 can include an AI module 530 configured to implement one or more algorithms and machine learning models to analyze the stored data in data layer 520 and derive meaningful insights. In some non-limiting examples, AI module 530 can apply predictive analytics, anomaly detection, and optimization algorithms to identify patterns, trends, and potential risks within the supply chain. AI module 530 can continuously learn from new data inputs and adapt its models to provide accurate and up-to-date insights. AI module 530 can generate predictions, recommendations, and alerts and publish such insights to dedicated data feeds.

Data engine layer 540 can comprise a set of interconnected systems responsible for specialized data ingestion, processing, transformation, and integration. Within the RTDM module 500, these systems include a collection of headless engines 540 operate autonomously, representing distinct functionalities. These engines represent distinct functionalities within the system and can include, for example, one or more recommendation engines, insights engines, and subscription management engines. Non-limiting examples of these headless engines include engines for subscriptions, solutions/bundles, ITAD (IT Asset Disposition), renewals, marketing, special pricing, financing, returns/claims, end user, order tracking, super chain, search, vendor management, professional services, and ESG (Environmental, Social, and Governance). These headless engines leverage the harmonized data stored in the data mesh to deliver specific business logic and services. Engines 540 can leverage the harmonized data stored in the data mesh to deliver specific business logic and services. Each engine is designed to be pluggable, allowing for flexibility and future expansion of the module's capabilities. Any additional headless engine can be included in data engine layer 540 or in other exemplary layers of the disclosed system.

These systems can be configured to receive data from multiple sources, such as transactional systems, IoT devices, and external data providers. The data ingestion process involves extracting data from these sources and transforming it into a standardized format. Data processing algorithms are applied to cleanse, aggregate, and enrich the data, making it ready for further analysis and integration.

Further, to facilitate integration and access to RTDM module 500, a data distribution mechanism 545 can be employed. Data distribution mechanism 545 can be configured to include one or more APIs to facilitate distribution of data from the data mesh and engines to various endpoints, including user interfaces, micro front-ends, and external systems.

Experience layer 550 focuses on delivering an intuitive and user-friendly interface for interacting with supply chain and distribution data. Experience layer 550 can include data visualization tools, interactive dashboards, and user-centric functionalities. Through this layer, users can retrieve and analyze real-time data related to various supply chain and distribution metrics such as inventory levels, sales performance, and customer demand. The user experience layer supports personalized data feeds, allowing users to customize their views and receive relevant updates based on their roles and responsibilities. Users can subscribe to specific data updates, such as inventory changes, pricing updates, or new SKU notifications, tailored to their preferences and roles.

Thereby, in some embodiments, RTDM module 500 for supply chain and distribution management can include an integration with a system of records and include one or more of a data layer with a data mesh and purposive datastores, an AI component, a data engine layer, and a user experience layer. These components work together to provide users with intuitive access to real-time supply chain and distribution data, efficient data processing and analysis, and efficient integration with existing enterprise systems. The technical feeds and retrievals within the module ensure that users can retrieve relevant, up-to-date information and insights to make informed decisions and optimize supply chain and distribution operations. Accordingly, RTDM module 500 facilitates supply chain and distribution management by providing a scalable, real-time data management solution. Its innovative architecture allows for the rich integration of disparate data sources, efficient data harmonization, and advanced analytics capabilities. The module's ability to replicate and harmonize data from diverse ERPs, while maintaining auditable and repeatable transactions, provides a distinct advantage in enabling a unified view for vendors, resellers, customers, end customers, and other entities in a distribution system, including an IT distribution system.

### SINGLE PANE OF GLASS UI

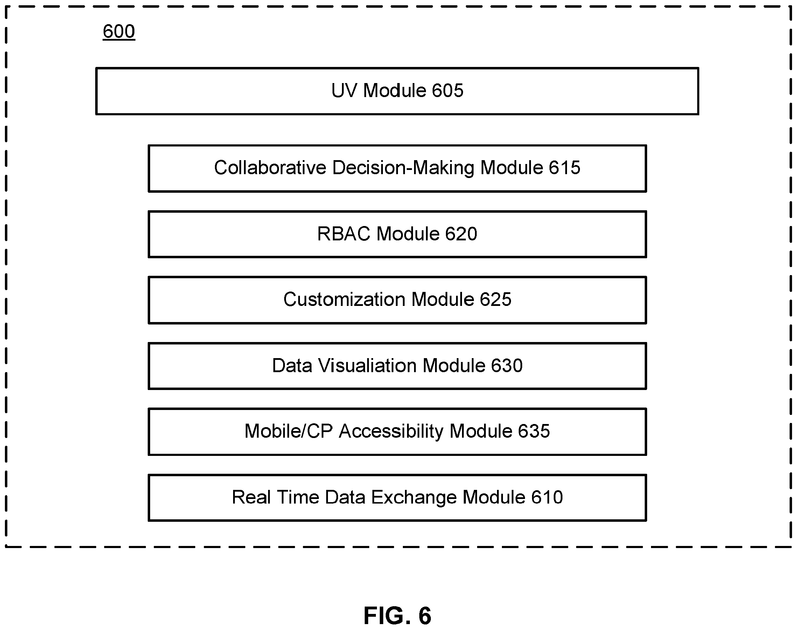

FIG. 6 illustrates an SPoG UI, according to an embodiment, generally indicated as SPoG UI 600. In some embodiments, SPoG UI 600, which can be an embodiment of SPoG UI 305, represents a comprehensive and intuitive user interface designed to provide stakeholders with a unified and customizable view of the entire supply chain and distribution ecosystem. It combines a range of features and functionalities that enable users to gain a comprehensive understanding of the supply chain and efficiently manage their operations.

SPoG 600 can incorporate High-Velocity Data in Data-Rich Environments. In contemporary data-rich environments, conventional UI designs frequently grapple with presenting a large amount of information in an understandable, efficient, and visually appealing manner. The challenge intensifies when data is dynamic, changing in real-time, and needs to be displayed effectively in single-pane environments that emphasize clean, white-space-oriented designs.

SPoG UI 600 can integrate capabilities with the RTDM module 310/500, stakeholders to provide a powerful and user-friendly interface for supply chain and distribution management. In some embodiments, SPoG UI 600 can include Unified View (UV) Module 605 to provide a customizable and holistic view of the supply chain, and Real-Time Data Exchange Module 610 to ensure accurate and up-to-date data synchronization based on the RTDM module 310/500. Collaborative Decision-Making Module 615 promotes effective communication and collaboration between populations of diverse groups. RBAC Module 620 can be configured to secure access control. Customization Module 625, Data Visualization Module 630, and Mobile and Cross-Platform Accessibility Module 635 can be configured to enhance the user experience, data analysis, and accessibility, respectively. In some embodiments, the above-mentioned modules can enable stakeholders to make informed decisions, optimize supply chain and distribution operations, and drive business efficiency within the supply chain and distribution ecosystem.

SPoG UI 600 can include UV Module 605, which provides stakeholders with a centralized and customizable dashboard-style layout. This module allows users to access real-time data, analytics, and functionalities tailored to their specific roles and responsibilities within the supply chain and distribution ecosystem. The UV Module 605 serves as a single-entry point for users, offering a holistic and comprehensive view of the supply chain and distribution operations and empowering them to make data-driven decisions. UV module 605 can be configured to manage real-time data efficiently, maintaining a visually clean interface without compromising performance. This innovative approach includes a unique configuration of the UI structure, responsive data visualizations, real-time data handling methods, adaptive information architecture, and white space optimization.

UV module 605 can be structured around a grid-based layout system, leveraging CSS Grid and Flexbox technologies. This structure offers the flexibility to create a fluid layout with elements that adjust automatically to the available space and content. HTML5 and CSS3 serve as the foundational technologies for creating the UI, while JavaScript, specifically React.j s, manages the dynamic aspects of the UI.

SPoG UI 600 can integrate UV module 605 with Real-Time Data Exchange Module 610, to facilitate continuous exchange of data between SPoG UI 600 and RTDM module 310, to leverage one or more data sources, which can include one or more ERPs, CRMs, or other sources. Through this module, stakeholders can access up-to-date, accurate, and harmonized data. Real-time data synchronization ensures that the information presented in SPoG UI 600 reflects the latest insights and developments across the supply chain. This integration enables stakeholders to make informed decisions based on accurate and synchronized data.

In some embodiments, Collaborative Decision-Making Module 615 within SPoG UI 600 fosters real-time collaboration and communication among stakeholders. This module enables the exchange of information, initiation of workflows, and sharing of insights and recommendations. By integrating with the RTDM module 310/500, the Collaborative Decision-Making Module 615 ensures that stakeholders can collaborate effectively based on accurate and synchronized data. This promotes overall operational efficiency and collaboration within the supply chain and distribution ecosystem.

To ensure secure and controlled access to functionalities and data, SPoG UI 600 incorporates Role/Entitlement-Based Access Control (RBAC) Module 620. Administrators can define roles and entitlements, assign permissions, and control user access based on their responsibilities and organizational hierarchy. RBAC Module 620 ensures that only authorized users can access specific features and information, safeguarding data privacy, security, and compliance within the supply chain and distribution ecosystem.

In some embodiments, Customization Module 625 empowers users to personalize their dashboard and tailor the interface to their preferences and needs. Users can arrange widgets, charts, and data visualizations to prioritize the information most relevant to their specific roles and tasks. This module allows stakeholders to customize their view of the supply chain and distribution operations, providing a user-centric experience that enhances productivity and usability.

SPoG UI 600 can include Data Visualization Module 630, which enables stakeholders to analyze and interpret supply chain and distribution data through interactive dashboards, charts, graphs, and visual representations. Leveraging advanced visualization techniques, this module presents complex data in a clear and intuitive manner. Users can gain insights into key performance indicators (KPIs), trends, patterns, and anomalies, facilitating data-driven decision-making and strategic planning.

SPoG UI 600 can include Mobile and Cross-Platform Accessibility Module 635 to ensure accessibility across multiple devices and platforms. Stakeholders can access the interface from desktop computers, laptops, smartphones, and tablets, allowing them to stay connected and informed while on the go. This module optimizes the user experience for different screen sizes, resolutions, and operating systems, ensuring integrated access to real-time data and functionalities across various devices.

It should be understood that the operations shown in the exemplary methods are not exhaustive and that other operations can be performed as well before, after, or between any of the illustrated operations. In some embodiments of the present disclosure, the operations can be performed in a different order and/or vary.

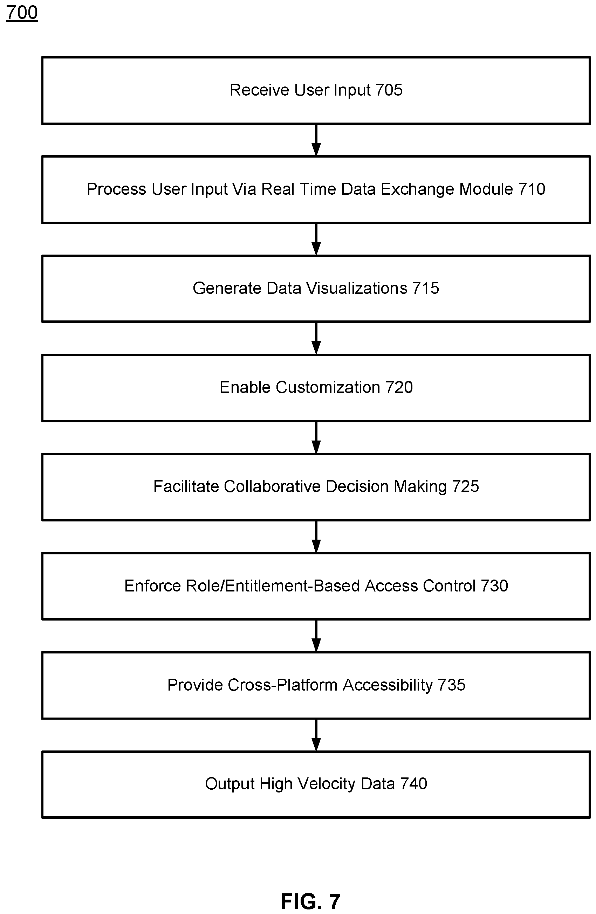

FIG. 7 is a flow diagram of a method 700 for performing comprehensive distribution management operations using the SPoG UI, according to some embodiments of the present disclosure. In some embodiments, method 700 provides operational steps to streamline supply chain and distribution processes, enhance decision-making, and optimize operations within the supply distribution chain ecosystem. In some embodiments, method 700 performs real-time data retrieval, visualization, customization, collaboration, access control, and cross-platform accessibility functionalities through the SPoG UI. Based on the disclosure herein, operations in method 700 can be performed in a different order and/or vary to suit specific implementation requirements.

At operation 705, a computing device receives user input through the SPoG UI, representing a wide range of requests and commands related to supply chain and distribution management. The user input encompasses actions such as selecting specific data visualizations, accessing different modules or functionalities, initiating workflows, configuring the interface, and performing data-driven analyses. This interactive input mechanism enables stakeholders to effectively engage with the SPoG UI and obtain relevant insights to support their decision-making processes.

At operation 710, the computing device processes the user input and interacts with the Real-Time Data Exchange Module, leveraging its integration capabilities with the RTDM module. This integration ensures efficient data retrieval and synchronization, allowing the computing device to access up-to-date and accurate information from diverse data sources within the supply chain and distribution ecosystem. By establishing a connection with the RTDM module and leveraging the real-time data exchange, the computing device ensures that the insights presented in the SPoG UI reflect the latest developments and provide a comprehensive view of the supply chain and distribution operations.

At operation 715, the computing device employs the Data Visualization Module to generate visually appealing and interactive representations of the retrieved supply chain and distribution data. This module utilizes advanced visualization techniques to create dynamic dashboards, charts, graphs, and other visual elements that effectively communicate key performance indicators, trends, patterns, anomalies, and correlations within the supply chain and distribution ecosystem. Through these visualizations, stakeholders can gain valuable insights, identify critical areas, and assess the overall health of their supply chain and distribution operations.

At operation 720, the computing device enables users to personalize their dashboards and tailor the SPoG UI interface according to their specific preferences and needs. The Customization Module empowers stakeholders to arrange widgets, charts, data visualizations, and other UI components to prioritize the information most relevant to their roles and responsibilities. This flexibility ensures a user-centric experience, allowing stakeholders to focus on critical data points and streamline their decision-making processes within the SPoG UI.

At operation 725, the computing device facilitates real-time collaboration and communication among stakeholders through the Collaborative Decision-Making Module. This module provides features that enable stakeholders to exchange information, share insights and recommendations, initiate workflows, and engage in discussions within the SPoG UI interface. By integrating with the RTDM module, the Collaborative Decision-Making Module ensures that stakeholders can collaborate effectively based on accurate and synchronized data, fostering a cohesive and agile supply chain and distribution ecosystem.

At operation 730, the computing device enforces secure access control mechanisms through the Role-Based Access Control (RBAC) Module integrated into the SPoG UI. This module enables administrators to define roles, assign permissions, and control user access based on their responsibilities and organizational hierarchy. By enforcing RBAC, the computing device safeguards data privacy, ensures confidentiality, and maintains regulatory compliance within the supply chain and distribution ecosystem. Authorized stakeholders can access specific features, functionalities, and information based on their assigned roles, minimizing the risk of unauthorized data access or misuse.

At operation 735, the computing device optimizes the SPoG UI for integrated accessibility across multiple devices and platforms through the Mobile and Cross-Platform Accessibility Module. This module ensures that stakeholders can access the SPoG UI interface from desktop computers, laptops, smartphones, and tablets, enabling them to stay connected, informed, and engaged with supply chain and distribution operations while on the go. The interface is optimized to provide a consistent and intuitive user experience across different screen sizes, resolutions, and operating systems, facilitating real-time data access and enhancing stakeholder productivity.

At operation 740, the computing device leverages the High-Velocity Data in Data-Rich Environments module to efficiently handle real-time data and maintain a visually clean interface. This module incorporates a unique configuration of the SPoG UI structure, responsive data visualizations, real-time data handling methods, adaptive information architecture, and optimization techniques. Operation 740 can include processing a large amount of dynamic supply chain and distribution data in a comprehensible, efficient, and visually appealing manner. The SPoG UI's grid-based layout system, powered by CSS^{®} Grid and Flexbox^{®} technologies, enables fluid adaptation of UI elements to available space and content, while HTML5, CSS3, and JavaScript (specifically React.js) manage the dynamic aspects of the interface.

In summary, the method 700 depicted in FIG. 7 outlines a comprehensive approach to supply chain and distribution management through the SPoG UI. By leveraging real-time data retrieval, visualization, customization, collaboration, access control, and cross-platform accessibility functionalities, stakeholders gain valuable insights into supply chain and distribution operations and can make informed decisions. The method facilitates efficient integration with the RTDM module, ensuring accurate and up-to-date data synchronization. Through personalized dashboards, interactive data visualizations, collaborative decision-making, secure access control, and cross-device accessibility, the SPoG UI empowers stakeholders to optimize their supply chain and distribution operations, enhance collaboration, and drive efficiency in the dynamic and complex supply chain and distribution ecosystem.

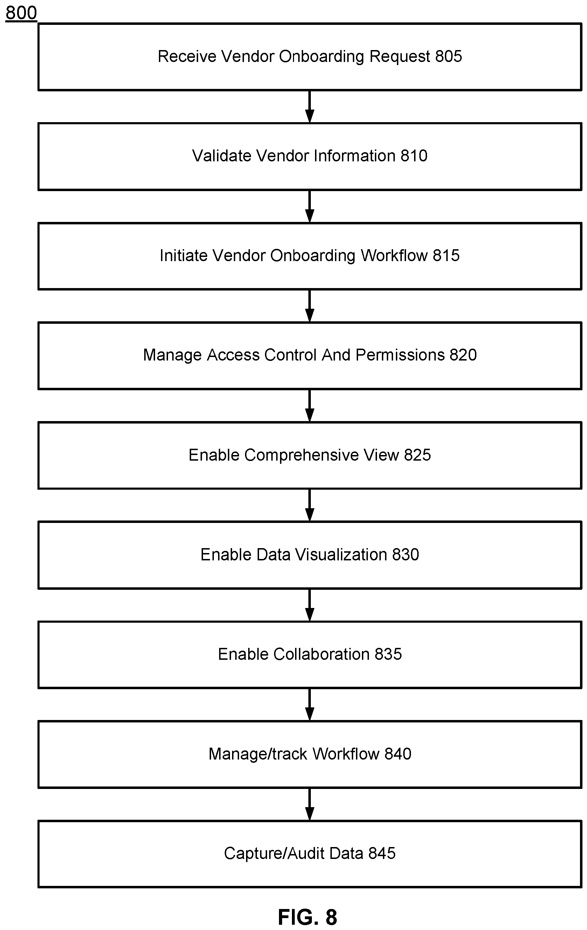

FIG. 8 is a flow diagram of a method 800 for vendor onboarding using the SPoG UI, according to some embodiments of the present disclosure. In some embodiments, method 800 outlines a streamlined and efficient process that leverages the capabilities of the SPoG UI to facilitate the onboarding of vendors into the supply chain and distribution ecosystem. By integrating real-time data, collaborative decision-making, and role-based access control functionalities, the SPoG UI enables stakeholders to effectively manage and optimize the vendor onboarding process. Based on the disclosure herein, operations in method 800 can be performed in a different order and/or vary to suit specific implementation requirements.

At operation 805, the process is initiated when a vendor expresses interest in joining the supply chain and distribution ecosystem. The computing device, utilizing the SPoG UI, receives the vendor's information and relevant details. This can include company profiles, contact information, product catalogs, certifications, and any other pertinent data required for the vendor onboarding process.

At operation 810, the computing device validates the vendor's information using integration capabilities with the Real-Time Data Exchange Module. By leveraging real-time data synchronization and access to external systems, the computing device ensures that the vendor's details are accurate and up to date. This validation step helps maintain data integrity, minimizes errors, and establishes a reliable foundation for the vendor onboarding process.

At operation 815, the computing device initiates the vendor onboarding workflow through the Collaborative Decision-Making Module. This module allows stakeholders involved in the onboarding process, such as procurement officers, legal teams, and vendor managers, to collaborate and make informed decisions based on the vendor's information. The SPoG UI facilitates efficient communication, file sharing, and workflow initiation, enabling stakeholders to collectively assess the vendor's suitability and efficiently progress through the onboarding steps.

At operation 820, the computing device employs the Role-Based Access Control (RBAC) Module to manage access control and permissions throughout the vendor onboarding process. The RBAC Module ensures that stakeholders only have access to the specific information and functionalities necessary for their roles. This control mechanism protects sensitive data, maintains privacy, and aligns with regulatory requirements. Authorized stakeholders can securely review and contribute to the vendor onboarding process, fostering a transparent and compliant environment.

At operation 825, the computing device provides stakeholders with a comprehensive view of the vendor onboarding process through the SPoG UI's Unified View (UV) Module. This module presents an intuitive and customizable dashboard-style layout, consolidating relevant information, milestones, and tasks associated with the vendor onboarding process. Stakeholders can monitor progress, track documentation requirements, and access real-time updates to ensure efficient and timely completion of the onboarding tasks.

At operation 830, the computing device enables stakeholders to interact with the SPoG UI's Data Visualization Module, which provides dynamic visualizations and analytics related to the vendor onboarding process. Through interactive charts, graphs, and reports, stakeholders can assess key performance indicators, identify bottlenecks, and gain insights into the overall efficiency of the vendor onboarding process. This data-driven approach empowers stakeholders to make informed decisions, allocate resources effectively, and optimize the onboarding workflow.

At operation 835, the computing device facilitates integrated collaboration among stakeholders involved in the vendor onboarding process through the Collaborative Decision-Making Module. This module enables real-time communication, document sharing, and workflow coordination, allowing stakeholders to streamline the onboarding process. By providing a centralized platform for discussion, feedback, and approvals, the SPoG UI promotes efficient collaboration and reduces delays in the vendor onboarding workflow.

At operation 840, the computing device ensures effective management and tracking of the vendor onboarding process using the SPoG UI's Workflow Management Module. This module enables stakeholders to define and manage the sequence of tasks, approvals, and reviews required for successful vendor onboarding. Workflow templates can be configured, allowing for standardization and repeatability in the onboarding process. Stakeholders can monitor the status of each task, track completion, and receive notifications to ensure timely progress.

At operation 845, the computing device captures and records the vendor onboarding activities within the SPoG UI's Audit Trail Module. This module maintains a detailed history of the onboarding process, including actions taken, documents reviewed, and decisions made. The audit trail enhances transparency, accountability, and compliance, providing stakeholders with a reliable record for future reference and potential audits.

At operation 850, the computing device concludes the vendor onboarding process within the SPoG UI. Once all necessary steps, reviews, and approvals are completed, the vendor is officially onboarded into the supply chain and distribution ecosystem. The SPoG UI can provide stakeholders with a summary of the onboarding process, allowing them to verify the completion of all requirements and initiate further actions, such as contract signing, product listing, and collaboration.

In conclusion, method 800 depicted in FIG. 8 outlines a streamlined and efficient vendor onboarding process using the SPoG UI. By leveraging real-time data integration, collaborative decision-making, role-based access control, comprehensive visualization, and workflow management functionalities, the SPoG UI empowers stakeholders to successfully onboard vendors into the supply chain and distribution ecosystem. This process ensures data accuracy, promotes transparency, enhances collaboration, and facilitates informed decision-making throughout the vendor onboarding workflow. The SPoG UI's intuitive interface, combined with its customizable features and notifications, streamlines the onboarding process, reduces manual effort, and optimizes vendor integration within the dynamic and complex supply chain and distribution landscape.

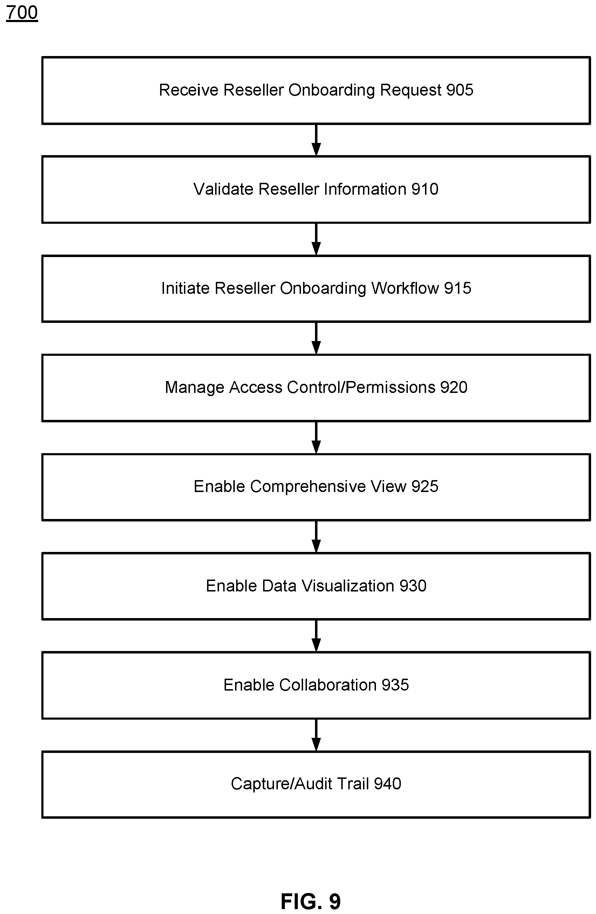

FIG. 9 is a flow diagram of a method 900 for reseller onboarding using the SPoG UI, according to some embodiments of the present disclosure. Method 900 outlines a streamlined and efficient process that leverages the capabilities of the SPoG UI to facilitate the onboarding of resellers into the supply chain and distribution ecosystem. By integrating real-time data, collaborative decision-making, and role-based access control functionalities, the SPoG UI enables stakeholders to effectively manage and optimize the reseller onboarding process. Based on the disclosure herein, operations in method 900 can be performed in a different order and/or vary to suit specific implementation requirements.

At operation 905, the process begins when a reseller expresses interest in joining the supply chain and distribution ecosystem. The computing device, utilizing the SPoG UI, receives the reseller's information and relevant details. This includes company profiles, contact information, business certifications, reseller agreements, and any other pertinent data required for the reseller onboarding process.

At operation 910, the computing device validates the reseller's information using integration capabilities with the Real-Time Data Exchange Module. By leveraging real-time data synchronization and access to external systems, the computing device ensures that the reseller's details are accurate and up to date. This validation step helps maintain data integrity, minimizes errors, and establishes a reliable foundation for the reseller onboarding process.

At operation 915, the computing device initiates the reseller onboarding workflow through the Collaborative Decision-Making Module. This module allows stakeholders involved in the onboarding process, such as sales representatives, legal teams, and account managers, to collaborate and make informed decisions based on the reseller's information. The SPoG UI facilitates integrated communication, file sharing, and workflow initiation, enabling stakeholders to collectively assess the reseller's suitability and efficiently progress through the onboarding steps.

At operation 920, the computing device employs the Role-Based Access Control (RBAC) Module to manage access control and permissions throughout the reseller onboarding process. The RBAC Module ensures that stakeholders only have access to the specific information and functionalities necessary for their roles. This control mechanism protects sensitive data, maintains privacy, and aligns with regulatory requirements. Authorized stakeholders can securely review and contribute to the reseller onboarding process, fostering a transparent and compliant environment.

At operation 925, the computing device provides stakeholders with a comprehensive view of the reseller onboarding process through the SPoG UI's Unified View (UV) Module. This module presents an intuitive and customizable dashboard-style layout, consolidating relevant information, milestones, and tasks associated with the reseller onboarding process. Stakeholders can monitor progress, track documentation requirements, and access real-time updates to ensure efficient and timely completion of the onboarding tasks.

At operation 930, the computing device enables stakeholders to interact with the SPoG UI's Data Visualization Module, which provides dynamic visualizations and analytics related to the reseller onboarding process. Through interactive charts, graphs, and reports, stakeholders can assess key performance indicators, identify bottlenecks, and gain insights into the overall efficiency of the onboarding process. This data-driven approach empowers stakeholders to make informed decisions, allocate resources effectively, and optimize the reseller onboarding workflow.

At operation 935, the computing device facilitates efficient collaboration among stakeholders involved in the reseller onboarding process through the Collaborative Decision-Making Module. This module enables real-time communication, document sharing, and workflow coordination, allowing stakeholders to streamline the onboarding process. By providing a centralized platform for discussion, feedback, and approvals, the SPoG UI promotes efficient collaboration and reduces delays in the reseller onboarding workflow.

At operation 940, the computing device records and maintains an audit trail of the reseller onboarding activities within the SPoG UI's Audit Trail Module. This module captures detailed information about actions taken, decisions made, and documents reviewed during the onboarding process. The audit trail enhances transparency, accountability, and compliance, serving as a valuable reference for future audits, reviews, and assessments.

At operation 945, the computing device concludes the reseller onboarding process within the SPoG UI. Once all necessary tasks, reviews, and approvals are completed, the reseller is officially onboarded into the supply chain and distribution ecosystem. The SPoG UI provides stakeholders with a summary of the onboarding process, ensuring that all requirements are met and facilitating further actions, such as contract signing, product listing, and collaboration with the reseller.

In conclusion, method 900 depicted in FIG. 9 highlights the streamlined and efficient reseller onboarding process using the SPoG UI. By leveraging real-time data integration, collaborative decision-making, role-based access control, comprehensive visualization, and audit trail functionalities, the SPoG UI empowers stakeholders to successfully onboard resellers into the supply chain and distribution ecosystem. The intuitive interface, customizable features, and robust collaboration capabilities of the SPoG UI streamline the onboarding process, enhance transparency, and foster efficient communication among stakeholders. The SPoG UI's data visualization capabilities facilitate data-driven decision-making, while the audit trail ensures compliance and provides a reliable record of the onboarding activities. Through the effective utilization of the SPoG UI, the reseller onboarding process becomes a well-orchestrated workflow, optimizing the integration of resellers and promoting business success within the dynamic supply chain and distribution environment.

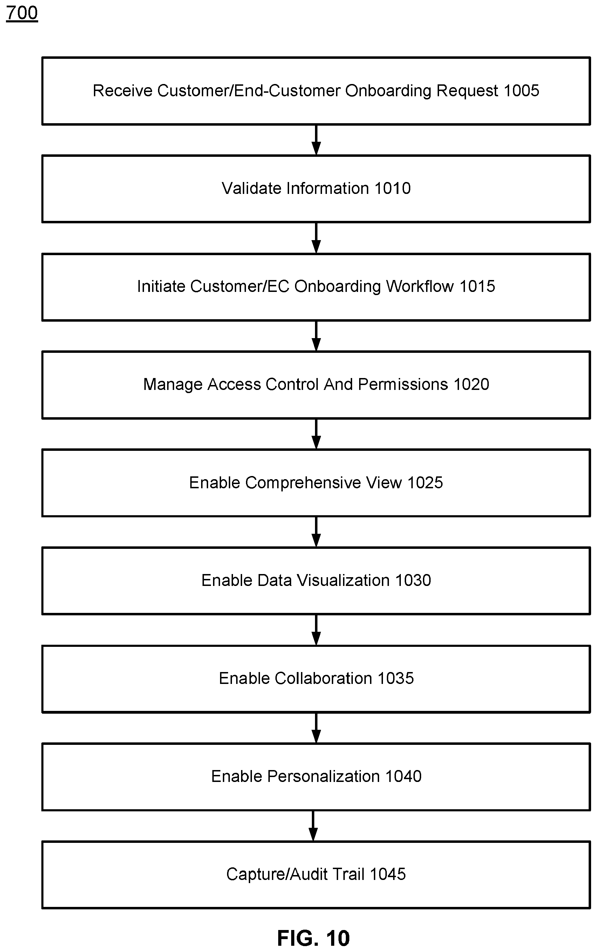

FIG. 10 is a flow diagram of a method 1000 for customer and end customer onboarding using the SPoG UI, according to some embodiments of the present disclosure. Method 1000 outlines a comprehensive and user-centric approach to efficiently onboard customers and end customers into the supply chain and distribution ecosystem. By leveraging the capabilities of the SPoG UI, including real-time data integration, collaborative decision-making, and personalized user experiences, stakeholders can successfully onboard and engage customers, providing them with an efficient and tailored onboarding experience. Based on the disclosure herein, operations in method 1000 can be performed in a different order and/or vary to suit specific implementation requirements.

At operation 1005, the process begins when a potential customer or end customer expresses interest in joining the supply chain and distribution ecosystem. The computing device, utilizing the SPoG UI, captures the customer's or end customer's information, preferences, and requirements necessary for the onboarding process. This includes contact details, business profiles, industry-specific preferences, and any other relevant data.

At operation 1010, the computing device validates the customer's or end customer's information using real-time data integration capabilities with external systems. By synchronizing and accessing data from various sources, such as customer relationship management (CRM) systems or other enterprise-wide solutions, the computing device ensures the accuracy and completeness of the customer's or end customer's information. This validation step helps establish a reliable foundation for the onboarding process and enhances data integrity.

At operation 1015, the computing device initiates the customer or end customer onboarding workflow through the Collaborative Decision-Making Module. This module facilitates integrated communication and collaboration among stakeholders involved in the onboarding process, such as sales representatives, account managers, and customer support teams. The SPoG UI provides a centralized platform for stakeholders to collectively assess customer requirements, define personalized onboarding journeys, and make informed decisions throughout the onboarding process.

At operation 1020, the computing device utilizes the Role-Based Access Control (RBAC) Module to manage access control and permissions during the onboarding process. The RBAC Module ensures that stakeholders have appropriate access to customer or end customer data based on their roles and responsibilities. This control mechanism protects sensitive information, maintains data privacy, and aligns with regulatory requirements. Authorized stakeholders can securely review, update, and track the onboarding progress, fostering a transparent and compliant onboarding environment.

At operation 1025, the computing device leverages the SPoG UI's Unified View (UV) Module to provide stakeholders with a comprehensive and customizable dashboard-style layout of the customer or end customer onboarding process. This module consolidates relevant information, tasks, and milestones associated with the onboarding journey, offering stakeholders a holistic view of the onboarding progress. Stakeholders can monitor the status, review documentation, and access real-time updates to ensure an efficient and integrated onboarding experience.

At operation 1030, the computing device utilizes the SPoG UI's Data Visualization Module to present dynamic visualizations and analytics related to the onboarding process. Through interactive charts, graphs, and reports, stakeholders gain insights into key onboarding metrics, customer engagement levels, and potential bottlenecks. The data-driven approach empowers stakeholders to make informed decisions, optimize onboarding strategies, and personalize the onboarding experience for each customer or end customer.

At operation 1035, the computing device enables stakeholders to interact with the Collaborative Decision-Making Module to facilitate integrated collaboration during the onboarding process. Stakeholders can share documents, initiate workflows, and exchange information in real-time. The SPoG UI fosters effective communication, reducing delays and ensuring alignment among stakeholders involved in customer or end customer onboarding.

At operation 1040, the computing device employs the Customization Module to allow stakeholders to personalize the onboarding experience for each customer or end customer. Stakeholders can tailor the interface, workflows, and communications to align with the customer's or end customer's preferences, industry-specific requirements, and strategic objectives. The customization capability enhances customer satisfaction and engagement during the onboarding journey.

At operation 1045, the computing device utilizes the Audit Trail Module within the SPoG UI to maintain a detailed record of the customer or end customer onboarding activities. This module captures information about actions taken, decisions made, and documents reviewed throughout the onboarding process. The audit trail enhances transparency, accountability, and compliance, serving as a valuable reference for future audits, reviews, and assessments.

At operation 1050, the computing device concludes the customer or end customer onboarding process within the SPoG UI. Once all necessary tasks, reviews, and approvals are completed, the customer or end customer is officially onboarded into the supply chain and distribution ecosystem. The SPoG UI provides stakeholders with a summary of the onboarding process, ensuring that all requirements are met and facilitating further actions, such as account activation, provisioning of services, or personalized customer engagement.

In conclusion, method 1000 depicted in FIG. 10 illustrates the customer and end customer onboarding process facilitated by the SPoG UI. By leveraging real-time data integration, collaborative decision-making, role-based access control, comprehensive visualization, customization, and audit trail functionalities, the SPoG UI empowers stakeholders to successfully onboard customers and end customers into the supply chain and distribution ecosystem. The intuitive interface, personalized features, and robust collaboration capabilities of the SPoG UI streamline the onboarding process, enhance transparency, and foster efficient communication among stakeholders. The SPoG UI's data visualization capabilities facilitate data-driven decision-making, while the customization and audit trail modules ensure a tailored and compliant onboarding experience. Through the effective utilization of the SPoG UI, the customer and end customer onboarding processes become integrated workflows, optimizing the integration of customers and end customers and promoting business success within the dynamic supply chain and distribution environment.

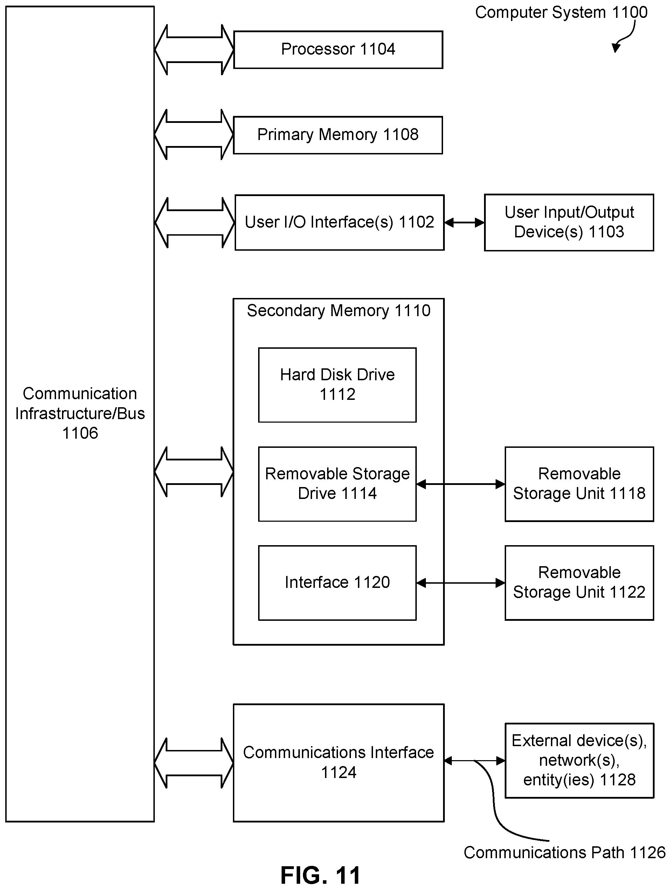

FIG. 11 is a block diagram of example components of device 1100. One or more computer systems 1100 may be used, for example, to implement any of the embodiments discussed herein, as well as combinations and sub-combinations thereof. Computer system 1100 may include one or more processors (also called central processing units, or CPUs), such as a processor 1104. Processor 1104 may be connected to a communication infrastructure or bus 1106.

Computer system 1100 may also include user input/output device(s) 1103, such as monitors, keyboards, pointing devices, etc., which may communicate with communication infrastructure 1106 through user input/output interface(s) 1102.

One or more processors 1104 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 1100 may also include a main or primary memory 1108, such as random access memory (RAM). Main memory 1108 may include one or more levels of cache. Main memory 1108 may have stored therein control logic (i.e., computer software) and/or data.

Computer system 1100 may also include one or more secondary storage devices or memory 1110. Secondary memory 1110 may include, for example, a hard disk drive 1112 and/or a removable storage device or drive 1114.

Removable storage drive 1114 may interact with a removable storage unit 1118. Removable storage unit 1118 may include a computer-usable or readable storage device having stored thereon computer software (control logic) and/or data. Removable storage unit 1118 may be program cartridge and cartridge interface (such as that found in video game devices), a removable memory chip (such as an EPROM or PROM) and associated socket, a memory stick and USB port, a memory card and associated memory card slot, and/or any other removable storage unit and associated interface. Removable storage drive 1114 may read from and/or write to removable storage unit 1118.

Secondary memory 1110 may include other means, devices, components, instrumentalities or other approaches for allowing computer programs and/or other instructions and/or data to be accessed by computer system 1100. Such means, devices, components, instrumentalities or other approaches may include, for example, a removable storage unit 1122 and an interface 1120. Examples of the removable storage unit 1122 and the interface 1120 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 1100 may further include a communication or network interface 1124. Communication interface 1124 may enable computer system 1100 to communicate and interact with any combination of external devices, external networks, external entities, etc. (individually and collectively referenced by reference number 1128). For example, communication interface 1124 may allow computer system 1100 to communicate with external or remote devices 1128 over communications path 1126, which may be wired and/or wireless (or a combination thereof), and which may include any combination of LANs, WANs, the Internet, etc. Control logic and/or data may be transmitted to and from computer system 1100 via communication path 1126.

Computer system 1100 may also be any of a personal digital assistant (PDA), desktop workstation, laptop or notebook computer, netbook, tablet, smartphone, smartwatch or other wearables, appliance, part of the Internet-of-Things, and/or embedded system, to name a few non-limiting examples, or any combination thereof.

Computer system 1100 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 1100 may be derived from standards including but not limited to JavaScript Object Notation (JSON), Extensible Markup Language (XML), Yet Another Markup Language (YAML), Extensible Hypertext Markup Language (XHTML), Wireless Markup Language (WMLL), MessagePack, XML User Interface Language (XUL), or any other functionally similar representations alone or in combination. Alternatively, proprietary data structures, formats or schemas may be used, either exclusively or in combination with known or open standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 1100, main memory 1108, secondary memory 1110, and removable storage units 1118 and 1122, as well as tangible articles of manufacture embodying any combination of the foregoing. Such control logic, when executed by one or more data processing devices (such as computer system 1100), may cause such data processing devices to operate as described herein.

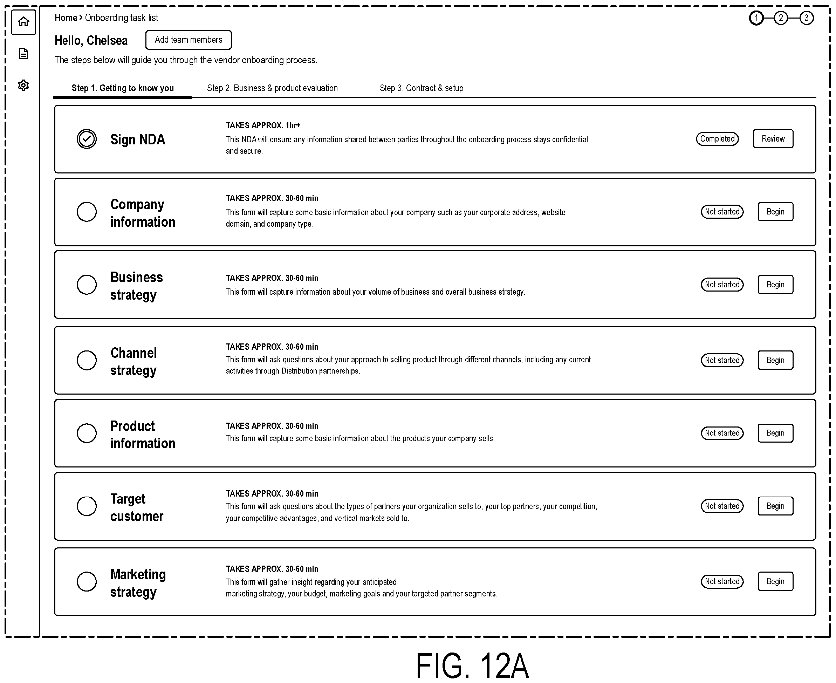

FIGS. 12A to 12Q depict various screens and functionalities of the SPoGUI related to vendor onboarding, partner dashboard, customer carts, order summary, SKU generation, order tracking, shipment tracking, subscription history, and subscription modifications. A detailed description of each figure is provided below:
FIG. 12A depicts a Vendor Onboarding Initiation screen that represents the initial step of the vendor onboarding process. It provides a form or interface where vendors can express their interest in joining the supply chain and distribution ecosystem. Vendors can enter their basic information, such as company details, contact information, and product catalogs.

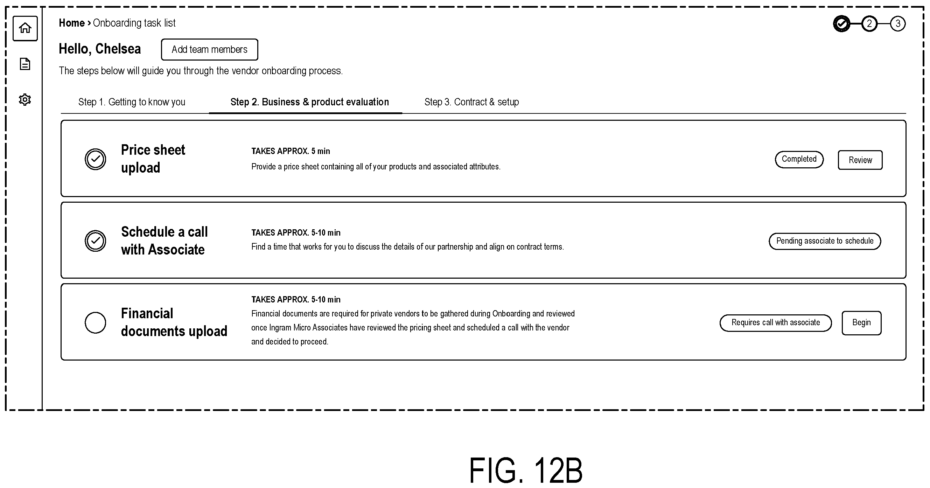

FIG. 12B depicts a Vendor Onboarding Guide that displays a step-by-step guide or checklist for vendors to follow during the onboarding process. It outlines the necessary tasks and requirements, ensuring that vendors have a clear understanding of the onboarding process and can progress smoothly.

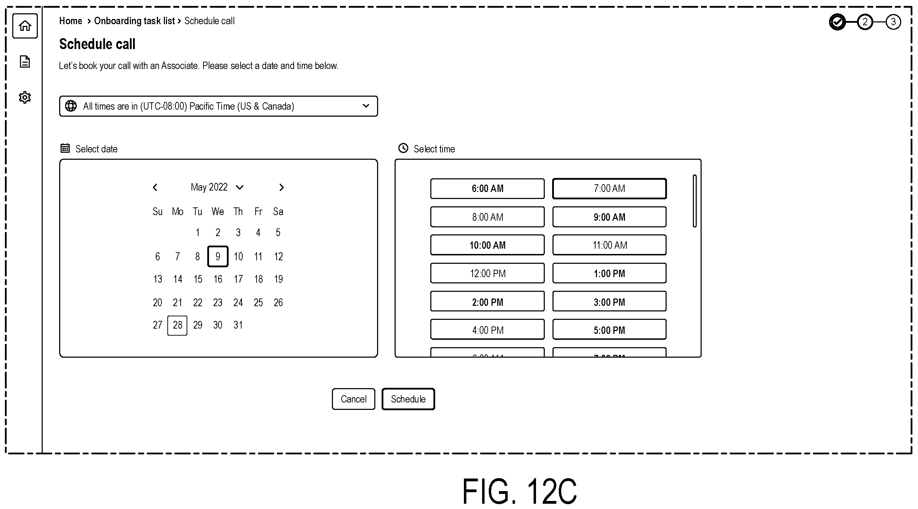

FIG. 12C depicts a Vendor Onboarding Call Scheduler that facilitates scheduling calls or meetings between vendors and platform associates or representatives responsible for guiding them through the onboarding process. Vendors can select suitable time slots or request a call, ensuring effective communication and assistance throughout the onboarding journey.

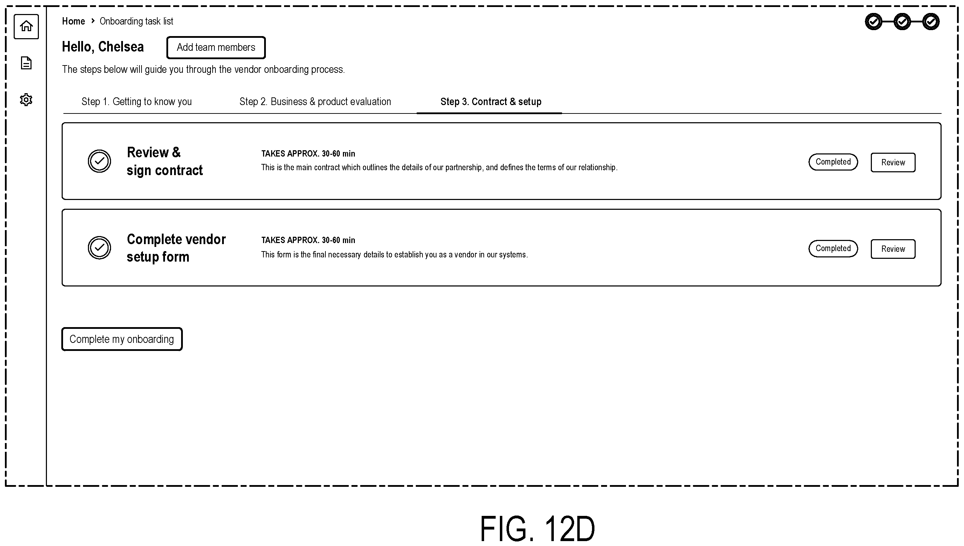

FIG. 12D depicts a Vendor Onboarding Task List that presents a comprehensive task list or dashboard that outlines the specific steps and actions required for successful vendor onboarding. It provides an overview of pending tasks, completed tasks, and upcoming deadlines, helping vendors track their progress and ensure timely completion of each onboarding task.

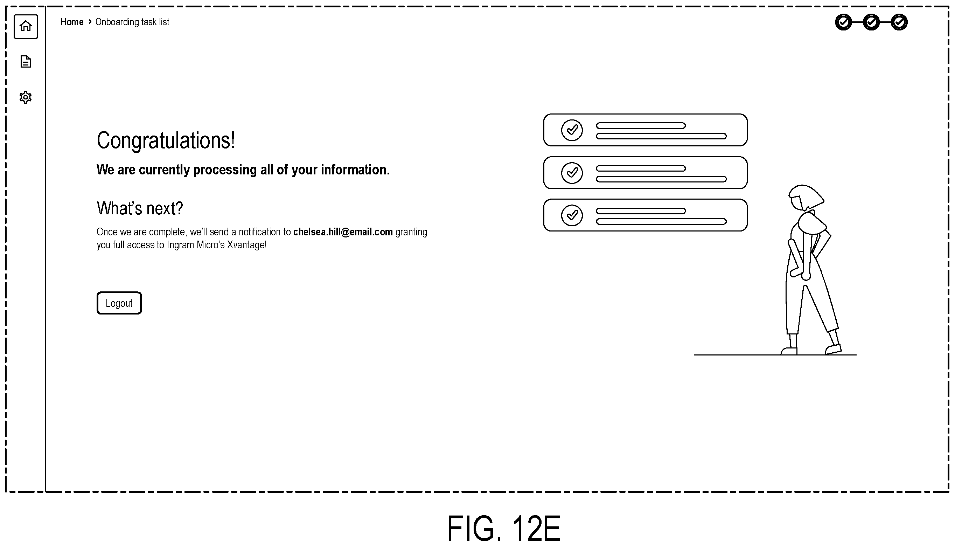

FIG. 12E depicts a Vendor Onboarding Completion Screen that confirms the successful completion of the vendor onboarding process. It may display a congratulatory message or summary of the completed tasks, indicating that the vendor is now officially onboarded into the supply chain and distribution ecosystem.

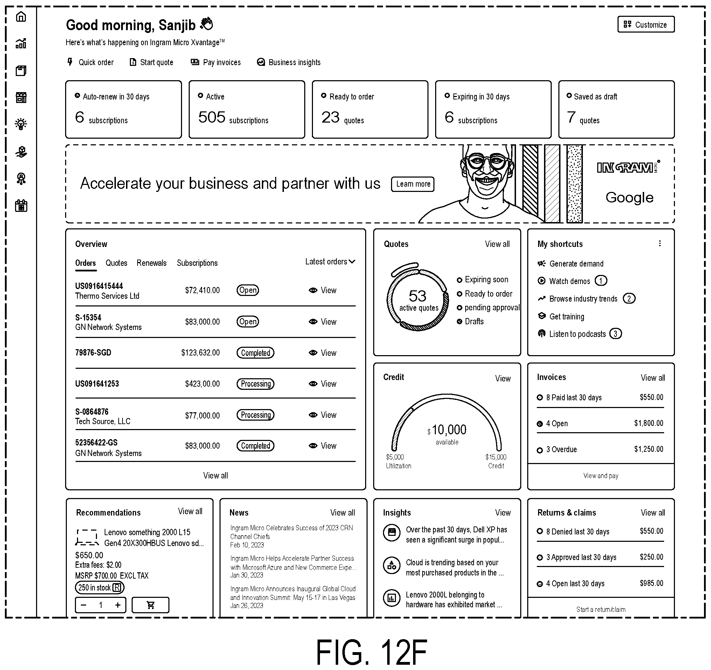

FIG. 12F depicts a Partner Dashboard that offers partners or stakeholders a centralized view of relevant information and metrics related to their partnership with the supply chain and distribution ecosystem. It provides an overview of performance indicators, key data points, and actionable insights to facilitate effective collaboration and decision-making.

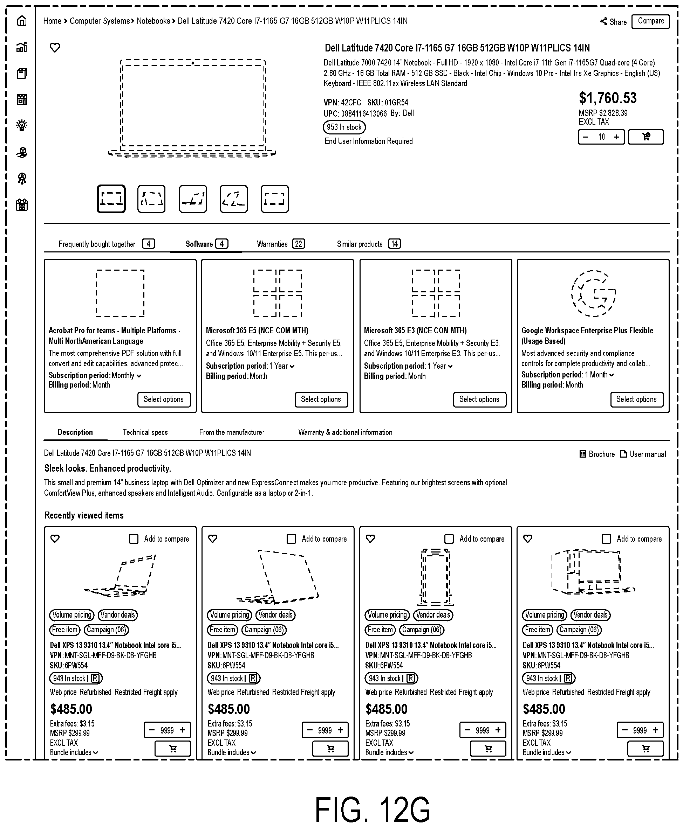

FIG. 12G depicts a Customer Product Cart that represents the customer's product cart, where they can add items they wish to purchase. It displays a list of selected products, quantities, prices, and other relevant details. Customers can review and modify their cart contents before proceeding to the checkout process.

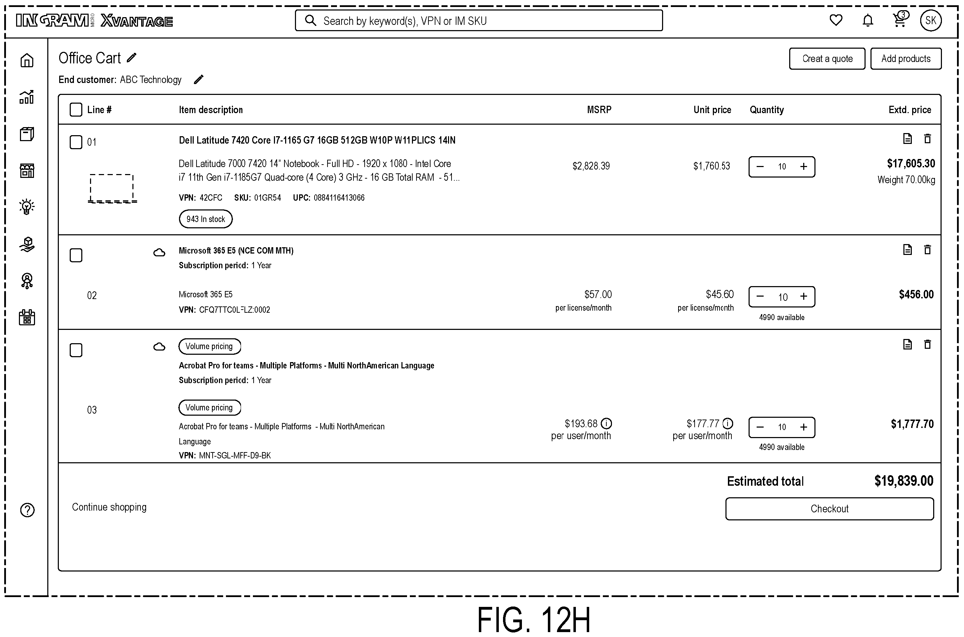

FIG. 12H depicts a Customer Subscription Cart that allows customers to manage their subscription-based purchases. It displays the selected subscription plans, pricing, and duration. Customers can review and modify their subscription details before finalizing their choices.

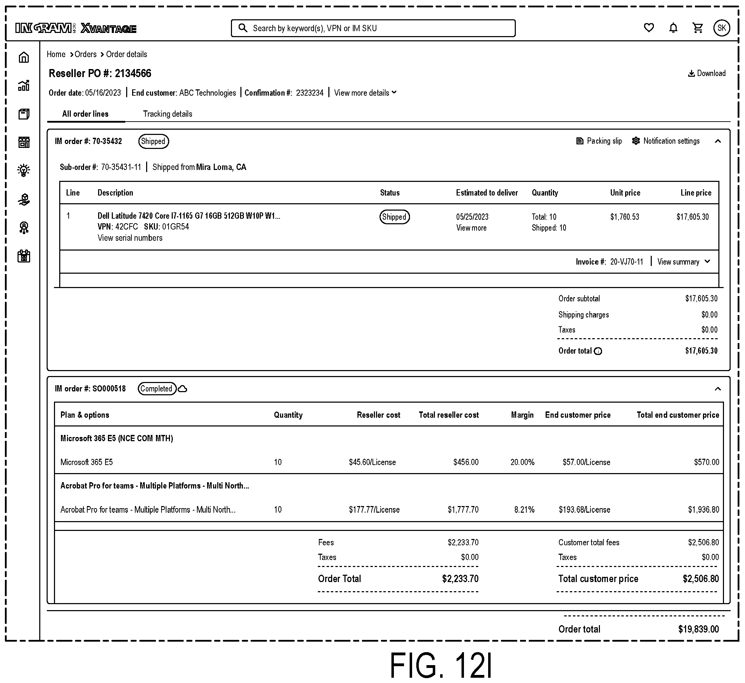

FIG. 12I depicts a Customer Order Summary that provides a summary of the customer's order, including details such as the products or subscriptions purchased, quantities, pricing, and any applied discounts or promotions. It allows customers to review their order before confirming the purchase.

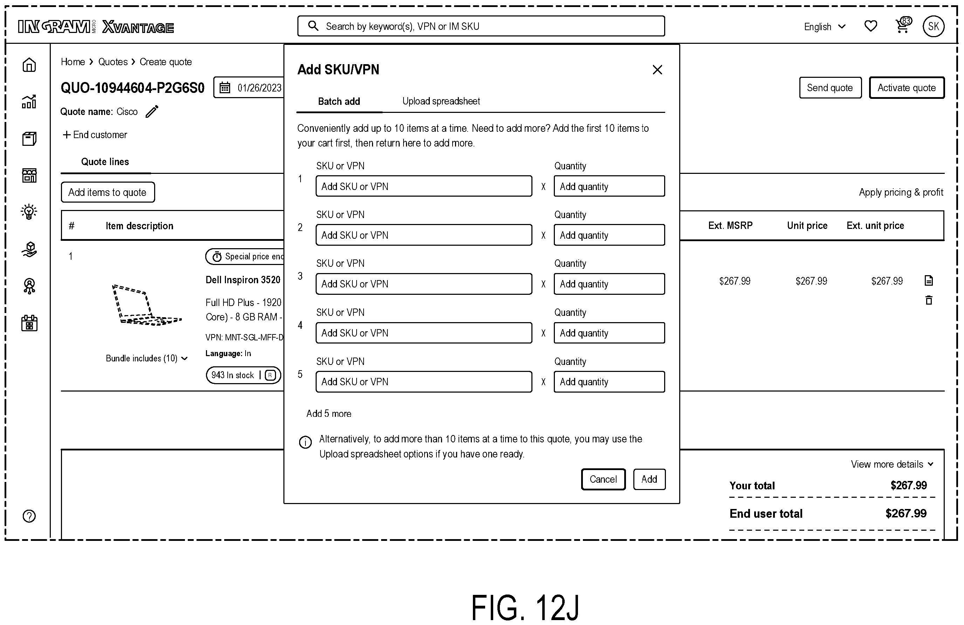

FIG. 12J depicts a Vendor SKU Generation screen for generating unique Stock Keeping Unit (SKU) codes for vendor products. It may include fields or options where vendors can specify the product details, attributes, and pricing, and the system automatically generates the corresponding SKU code.

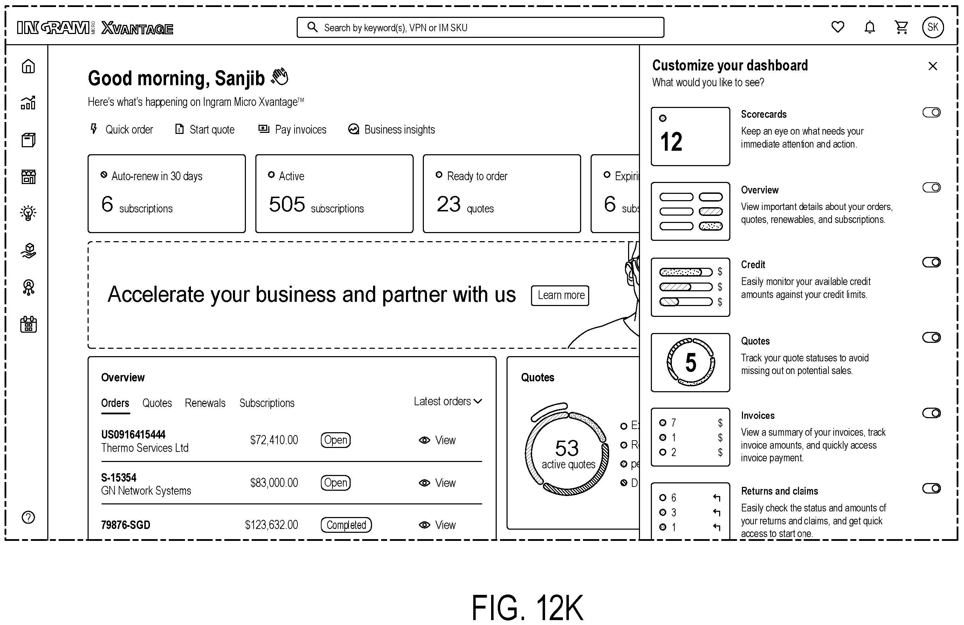

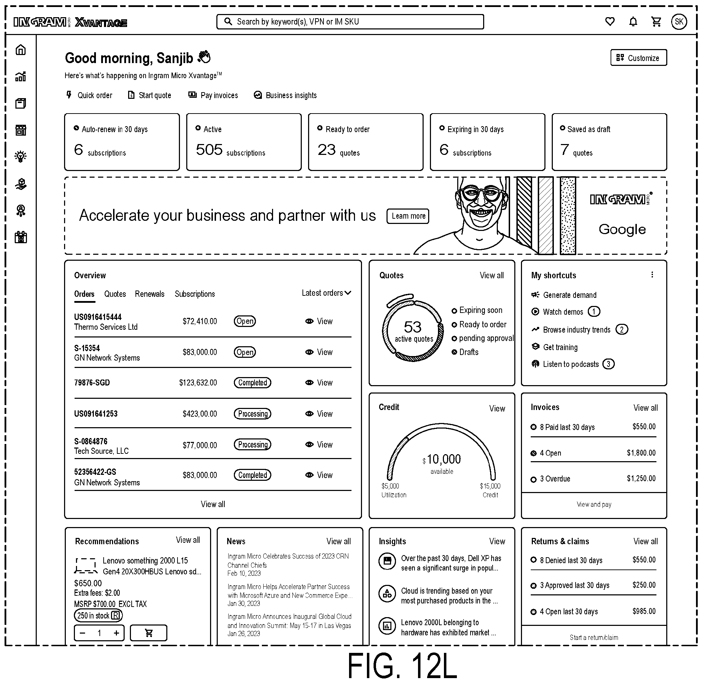

FIGS. 12K and 12L depicts Dashboard Order Summary to display summarized information about orders placed within the supply chain and distribution ecosystem. They present key order details, such as order number, customer name, product or subscription information, quantity, and order status. The dashboard provides an overview of order activity, enabling stakeholders to track and manage orders efficiently.

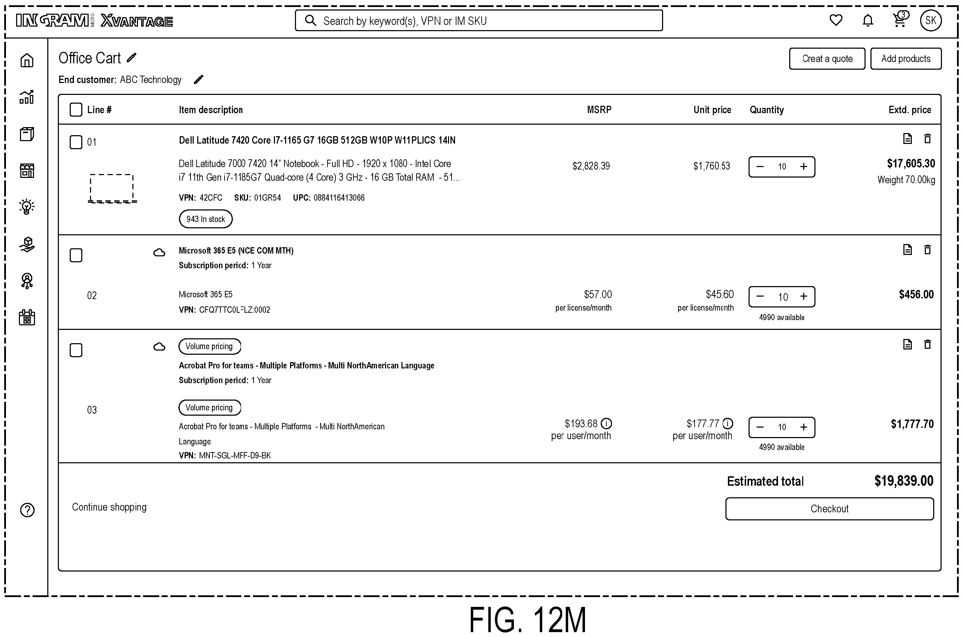

FIG. 12M depicts a Customer Subscription Cart that permits a customer to add, modify, or remove subscription plans. It can display a list of selected subscriptions, pricing, and renewal dates. Customers can manage their subscriptions and make changes according to their preferences and requirements.

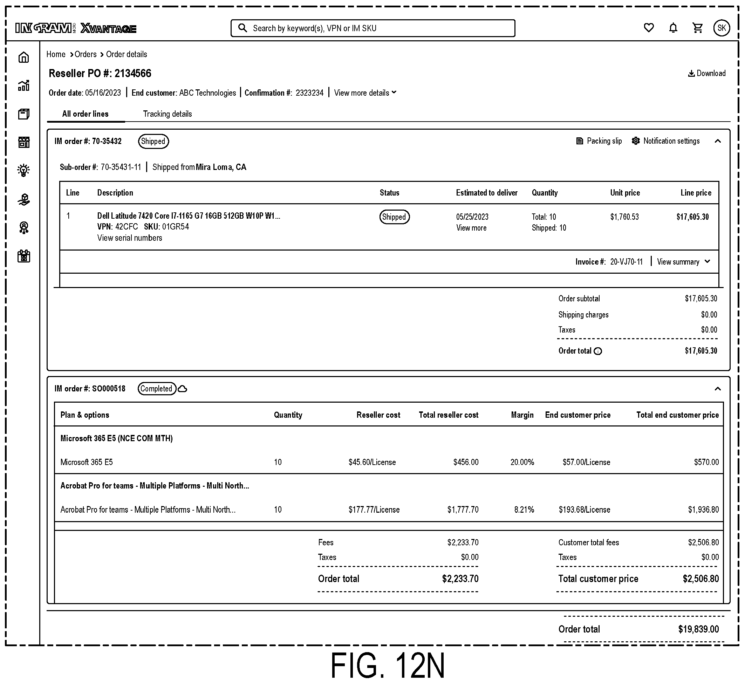

FIG. 12N depicts a Customer Order Tracking screen that enables customers to track the status and progress of their orders within the supply chain. It displays real-time updates on order fulfillment, including processing, packaging, and shipping. Customers can monitor the movement of their orders and anticipate delivery times.

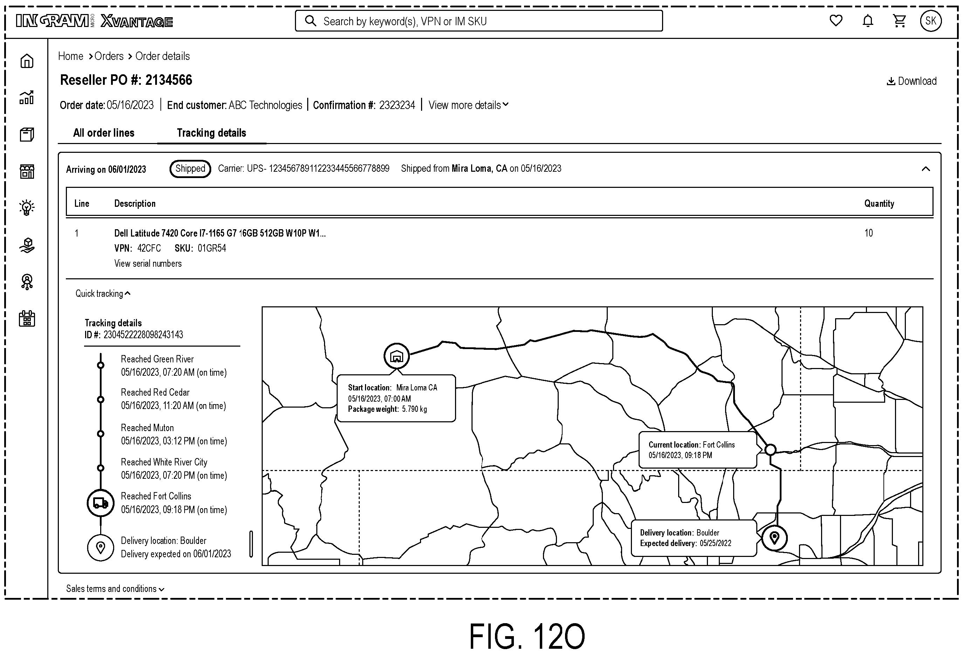

FIG. 12O depicts a Customer Shipment Tracking that provides customers with real-time tracking information about their shipments. It may include details such as the carrier, tracking number, current location, and estimated delivery date. Customers can stay informed about the whereabouts of their shipments.

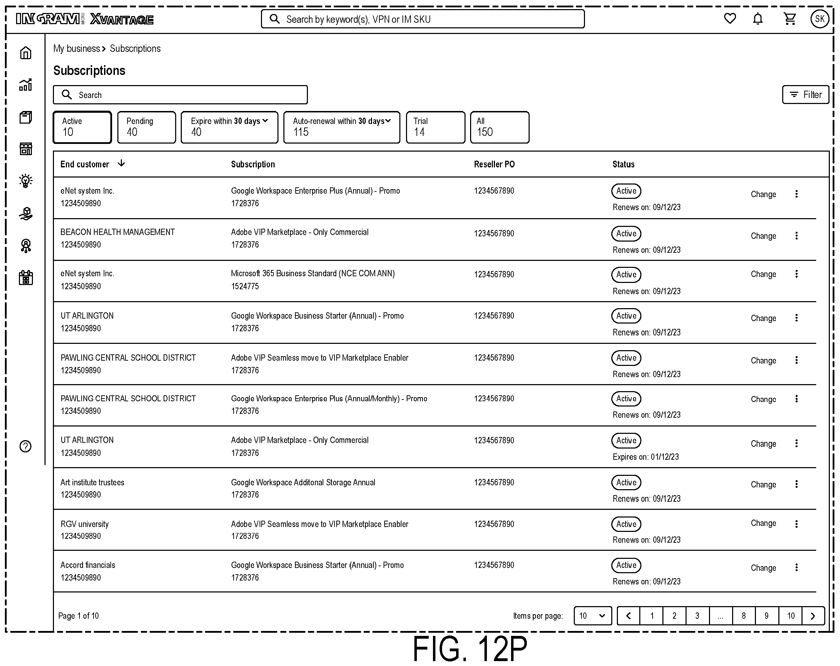

FIG. 12P depicts a Customer Subscription History, that presents a historical record of the customer's subscription activities. It displays a list of previous subscriptions, including the subscription plan, duration, and status. Customers can review their subscription history, track past payments, and refer to previous subscription details.

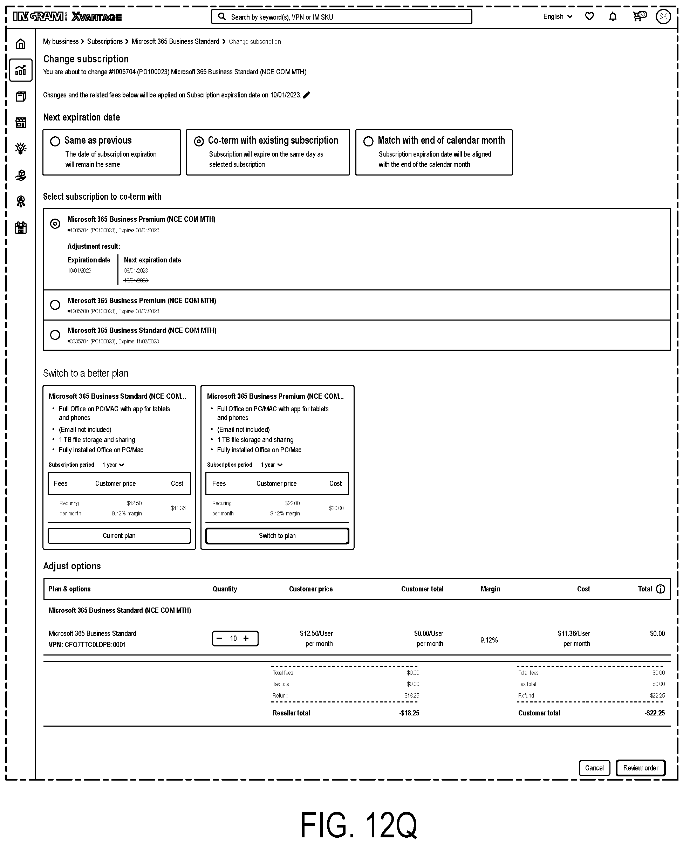

FIG. 12Q depicts a Customer Subscription Modifications dialog, that allows customers to modify their existing subscriptions. It offers options to upgrade or downgrade subscription plans, change billing details, or adjust other subscription-related preferences. Customers can manage their subscriptions according to their evolving needs or preferences.

The depicted UI screens are not limiting. In some embodiments the UI screens of FIGS. 12A to 12Q collectively represent the diverse functionalities and features offered by the SPoG UI, providing stakeholders with a comprehensive and user-friendly interface for vendor onboarding, partnership management, customer interaction, order management, subscription management, and tracking within the supply chain and distribution ecosystem.

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

In one general aspect, computer - implemented method may include integrating multiple communication channels (i.e., touchpoints) between the population of users into an unified interactive interface in a computer system, said unified interactive interface herein referred to as a SPoG UI, where the SPoG is a central interface component configured to consolidate user interactions, data, and/or functionalities of the population of users and where the SPoG UI is arranged to facilitate operations across a supply chain and distribution ecosystem. Computer - implemented method may also include managing end-to-end lifecycle of the user interactions utilizing the SPoG UI. Method may furthermore include collecting data from said user interactions within the SPoG UI. Method may in addition include analyzing said collected data to generate one or more insights for business growth. Method may moreover include performing one or more artificial intelligence and/or machine learning algorithms to enhance business operations based on the analyzed data. Method may also include incorporating regular updates and improvements into the SPoG UI based on the analyzed data. Method may furthermore include where the population of users may include users selected from two or more diverse groups, the groups having of distributors, resellers, customers, end-customers, vendors, and suppliers. Other embodiments of this aspect include corresponding computer systems, apparatus, and computer programs recorded on one or more computer storage devices, each configured to perform the actions of the methods.

Implementations may include one or more of the following features. Method where the integrating includes establishing communication links with multiple pre-existing business platforms. Method where the consolidated interaction points may include one or more websites, customer relationship management systems, vendor platforms, and supply chain and distribution management systems. Method where the managing of end-to-end lifecycle may include one or more of an initial contact, a service fulfillment, and a follow-up interaction. Method where the collecting data may include monitoring and/or logging of user activities within the SPoG UI. Method where the analyzing of collected data is performed using advanced statistical algorithms. Method where the artificial intelligence and machine learning algorithms include predictive analytics to identify market trends. Method where the artificial intelligence and machine learning algorithms include recommendation systems to personalize user interactions. The improvements can be based on analytics and/or the analyzed user feedback received through the SPoG UI. Implementations of the described techniques may include hardware, a method or process, or a computer tangible medium.

In one general aspect, system may include a communication integration module configured to integrate multiple communication channels (i.e., touchpoints). System may also include a consolidation module configured to combine the integrated communication channels into an unified interactive interface, said unified interactive interface herein referred to as a SPoG UI, where the SPoG is a central interface component configured to consolidate user interactions, data, and/or functionalities of the population of users and where the SPoG UI is arranged to facilitate operations across a supply chain and distribution ecosystem. System may furthermore include a lifecycle management module configured to manage end-to-end lifecycle of the user interactions within the SPoG. The system may additionally or alternatively include a data collection module configured to automatically collect data from the user interactions within the SPoG. System may moreover include a data analysis module configured to generate one or more insights based on the collected data. System may also include an artificial intelligence module configured to perform one or more AI and/or ML algorithms based on the analyzed data. System may furthermore include where the population of users may include users selected from two or more diverse groups, the groups having distributors, resellers, customers, end-customers, vendors, and suppliers. Other embodiments of this aspect include corresponding computer systems, apparatus, and computer programs recorded on one or more computer storage devices, each configured to perform the actions of the methods.

Implementations may include one or more of the following features. System where the SPoG is a graphical user interface displayed on a computer monitor. System where the communication integration module is capable of establishing communication links with various business platforms. System where the data collection module includes a monitoring and logging system to track user activities. The artificial intelligence module includes a predictive analytics component and a recommendation system component. Implementations of the described techniques may include hardware, a method or process, or a computer tangible medium.

In one general aspect, computer - implemented method may include displaying an unified interactive interface, herein referred to as a SPoG UI, on a computer monitor. The SPoG is a central interface component configured to consolidate user interactions, data, and/or functionalities of a population of users and where the SPoG UI is arranged to facilitate operations across a supply chain and distribution ecosystem. Computer - implemented method may also include providing interactive elements within the SPoG representing the consolidated channels. Method may furthermore include enabling user interaction with the elements to manage end-to-end partner lifecycle. Method may in addition include collecting and analyzing user interaction data for insights. Method may moreover include displaying personalized content based on the analyzed data. Method may also include where the population of users may include users selected from two or more diverse groups, the groups having distributors, resellers, customers, end-customers, vendors, and suppliers. Other embodiments of this aspect include corresponding computer systems, apparatus, and computer programs recorded on one or more computer storage devices, each configured to perform the actions of the methods.

Implementations may include one or more of the following features. Method where the interactive elements include links to various business platforms. Method where the user interaction includes actions may include one or more clicks, hovers, and input data. Method where the collected data is analyzed using advanced statistical algorithms. Method where the personalized content is generated based on recommendation algorithms. Method may include updating the SPoG UI based on user feedback and data analysis results. Implementations of the described techniques may include hardware, a method or process, or a computer tangible medium

It is to be appreciated that the Detailed Description section, and not the Summary and Abstract sections, is intended to be used to interpret the claims. The Summary and Abstract sections may set forth one or more but not all exemplary embodiments of the present invention as contemplated by the inventor(s), and thus, are not intended to limit the present invention and the appended claims in any way.

The present invention has been described above with the aid of functional building blocks illustrating the implementation of specified functions and relationships thereof. The boundaries of these functional building blocks have been arbitrarily defined herein for the convenience of the description. Alternate boundaries can be defined so long as the specified functions and relationships thereof are appropriately performed.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance.

The breadth and scope of the present invention should not be limited by any of the above-described exemplary embodiments, but should be defined only in accordance with the following claims and their equivalents.

## Claims

1. A computer-implemented method for dynamically consolidating interaction points between a population of users, the method comprising:
integrating multiple communication channels between the population of users into a unified interactive interface in a computer system, said unified interactive Single Pane of Glass (SPoG) user interface (UI), wherein the SPoG UI is a central interface component configured to consolidate user interactions, data, and/or functionalities of the population of users and wherein the SPoG UI is arranged to facilitate operations across a supply chain and distribution ecosystem;
managing a lifecycle of the user interactions utilizing the SPoG UI;
collecting data from said user interactions within the SPoG UI;
analyzing said collected data to generate one or more insights for business growth;
performing one or more artificial intelligence and/or machine learning algorithms to enhance business operations based on the analyzed data; and
incorporating regular updates and improvements into the SPoG UI based on the analyzed data,
wherein the population of users comprises users selected from two or more diverse groups, the groups consisting of distributors, resellers, customers, end-customers, vendors, and suppliers.

2. The method of claim 1, wherein the integrating includes establishing communication links with multiple pre-existing business platforms.

3. The method of claim 1, wherein the consolidated interaction points comprise one or more websites, customer relationship management systems, vendor platforms, and supply chain and distribution management systems.

4. The method of claim 1, wherein the managing of end-to-end lifecycle comprises one or more of an initial contact, a service fulfillment, and a follow-up interaction.

5. The method of claim 1, wherein the collecting data comprises monitoring and/or logging of user activities within the SPoG UI.

6. The method of claim 1, wherein the analyzing of collected data is performed using advanced statistical algorithms.

7. The method of claim 1, wherein the artificial intelligence and machine learning algorithms include predictive analytics to identify market trends.

8. The method of claim 1, wherein the artificial intelligence and machine learning algorithms include recommendation systems to personalize user interactions.

9. The method of claim 1, wherein the improvements are based on user feedback received through the SPoG UI.

10. A system for dynamically consolidating interaction points between a population of users, comprising:
a communication integration module configured to integrate multiple communication channels;
a consolidation module configured to combine the integrated communication channels into a unified interactive interface, said unified interactive interface herein referred to as a Single Pane of Glass (SPoG) user interface (UI), wherein the SPoG is a central interface component configured to consolidate user interactions, data, and/or functionalities of the population of users and wherein the SPoG UI is arranged to facilitate operations across a supply chain and distribution ecosystem;
a lifecycle management module configured to manage end-to-end lifecycle of the user interactions within the SPoG;
a data collection module configured to automatically collect data from the user interactions within the SPoG;
a data analysis module configured to generate one or more insights based on the collected data; and
an artificial intelligence module configured to perform one or more AI and/or ML algorithms based on the analyzed data,
wherein the population of users comprises users selected from two or more diverse groups, the groups comprising distributors, resellers, customers, end-customers, vendors, and suppliers.

11. The system of claim 10, wherein the SPoG is a graphical user interface displayed on a computer monitor.

12. The system of claim 10, wherein the communication integration module is capable of establishing communication links with various business platforms.

13. The system of claim 10, wherein the data collection module includes a monitoring and logging system to track user activities.

14. The system of claim 10, wherein the artificial intelligence module includes a predictive analytics component and a recommendation system component.

15. A computer-implemented method for providing a user interface method for dynamically consolidating interaction points, comprising:
displaying a unified interactive interface, herein referred to as a Single Pane of Glass (SPoG), on a computer monitor. wherein the SPoG is a central interface component configured to consolidate user interactions, data, and/or functionalities of a population of users and wherein the SPoG UI is arranged to facilitate operations across a supply chain and distribution ecosystem;
providing interactive elements within the SPoG representing the consolidated channels;
enabling user interaction with the elements to manage end-to-end partner lifecycle;
collecting and analyzing user interaction data for insights;
displaying personalized content based on the analyzed data,
wherein the population of users comprises users selected from two or more diverse groups, the groups comprising distributors, resellers, customers, end-customers, vendors, and suppliers.

16. The method of claim 15, wherein the interactive elements include links to various business platforms.

17. The method of claim 15, wherein the user interaction includes actions comprises one or more clicks, hovers, and input data.

18. The method of claim 15, wherein the collected data is analyzed using advanced statistical algorithms.

19. The method of claim 15, wherein the personalized content is generated based on recommendation algorithms.

20. The method of claim 15, further comprising collecting user feedback through the SPoG UI and updating the SPoGUI based on the user feedback and data analysis results.
